# EUROPÄISCHE PATENTSCHRIFT

(11) **EP 1 736 375 B1**
(45) Veröffentlichungstag und Bekanntmachung des Hinweises auf die Patenterteilung: **18.03.2009**
(21) Anmeldenummer: 06012906.1
(22) Anmeldetag: 22.06.2006
(51) Int. Cl.: B60R 21/13

(54) **Lösbare Halteeinrichtung zum Halten eines Überrollkörpers einer Überrollschutzvorrichtung eines Kraftfahrzeuges**
Releasable holding device to hold the roll over bar of a roll over protection device for a vehicle
Dispositif libérable retenant l'arceau d'un système de protection par arceau

(30) Priorität: 22.06.2005 DE 102005028960
(43) Veröffentlichungstag der Anmeldung: 27.12.2006
(73) Patentinhaber: Wilhelm Karmann GmbH, 49084 Osnabrück (DE)
(72) Erfinder: Kasubke, Wolfgang, 49124 Georgsmarienhütte (DE); Pottharst, Axel, 49492 Westercappeln (DE)

(56) Entgegenhaltungen:
- DE-A1- 10 158 222

## Beschreibung

Die Erfindung betrifft eine lösbare Halteeinrichtung zum Halten eines zwischen einer abgesenkten Ruheposition und einer ausgefahrenen Stützposition verlagerbaren Überrollkörpers einer Überrollschutzvorrichtung für ein Kraftfahrzeug in seiner Ruheposition nach der im Oberbegriff des Patentanspruches 1 näher definierten Art.

Aus der Praxis ist es bekannt, bei ausfahrbaren Überrollkörpern von Cabriolet-Fahrzeugen, welche in Form von Überrollbügeln ausgeführt sein können, eine lösbare Haltevorrichtung zum Halten des Überrollkörpers in dessen abgesenkter Ruhelage, in der der Überrollkörper üblicherweise unter Druckbeaufschlagung steht, vorzusehen. Die Haltevorrichtung kann dabei eine Bolzen-Klinke-Verbindung aufweisen, bei der eine karosseriefest gelagerte Klinke an einem Haltebolzen des Überrollkörpers eingreift und diesen im Crash-Fall beispielsweise in Folge einer elektromagnetischen Betätigung der Klinke freigibt.

Aus der DE 197 50 693 C2 ist ein gattungsgemäße Überrollschutzsystem für Kraftfahrzeuge bekannt, welches aus einem geführten Überrollkörper und einer mit ihm in antreibender Wirkverbindung stehenden Druckfeder zum Ausfahren des Überrollkörpers aus einer abgesenkten Ruhelage in eine obere Stützlage im Crash-Fall besteht. Zum Halten des Überrollkörpers in abgesenkter Ruhelage dient eine lösbare Haltevorrichtung, die in direkter Wirkverbindung mit einem am Überrollbügel befestigten Halteglied steht. Bei dieser durch einen pyrotechnischen Aktuator betätigbaren Haltevorrichtung handelt es sich um eine zweistufige Haltevorrichtung in Form eines Doppelhebelsystems mit zwei in mechanischer Wirkverbindung miteinander stehenden Hebeln.

Die DE 198 30 407 A1 offenbart eine Ver- und Entriegelungseinheit für ein Überrollschutzsystem eines Fahrzeuges mit einem Elektromagneten, einer Verriegelungsvorrichtung und einer Haltestange mit Haltevorrichtung. Auch hier wird vorgeschlagen, dass die Verriegelungsvorrichtung zwei wirkungsmäßig hintereinander angeordnete, jeweils um eine Achse drehbare Klinken aufweist, die von dem Elektromagneten ausgelöst werden, wobei ein permanentmagnetisches Element nach Auslösung der Verriegelungsvorrichtung sie in Entriegelungsstellung hält.

Ausgestaltung einer Halteeinrichtung mit einem Doppelhebelsystem, mit einem Elektromagneten und gegebenenfalls einem zusätzlichen Permanentmagneten betätigt wird, erfordert nachteilhafterweise eine Mehrzahl geometrisch aufwändiger, kostenintensiver Präzisionsbauteile.

Die DE 198 39 562 A1 offenbart eine Halteeinrichtung, insbesondere für eine Komponente der Unfallsicherheitseinrichtungen eines Kraftfahrzeuges, mit einem feststehenden Bauteil und einem zwischen einer Ruhestellung und einer Betätigungsstellung beweglichen Betätigungselement, welches mit dem feststehenden Bauteil über ein Halteelement entgegen der Kraft eines mechanischen Energiespeicherelementes, insbesondere einer vorgespannten Feder, in seiner Ruhelage gehalten ist. Zur Aktivierung des Betätigungselementes wird das Halteelement, welches ein Faden oder Draht ist, abgebrannt bzw. geschmolzen.

Es liegt somit bei dieser Lösung nachteilhafterweise die gesamte auf das Betätigungselement wirkende Vorspannkraft direkt an dem beispielsweise durch Stromdurchfluss aufschmelzbaren Draht an. Insbesondere für Überrollkörper eines Überrollschutzsystems, welche im Ruhezustand mit einer hohen Vorspannkraft beaufschlagt sind, ist eine Halteeinrichtung gemäß der DE 198 39 562 A1 ungeeignet.

Ein weiteres Beispiel einer direkten Anbindung eines im Ruhezustand vorgespannten Betätigungselementes an ein fahrzeugfestes Element mittels eines aufschmelzbaren Spannseiles als Auslöseelement ist in der DE 101 58 222 A1 beschrieben. Das Spannseil, welches zur Schmelzung und somit zur Auslösung des Betätigungselements an eine Stromquelle angeschlossen ist, ist dabei als Nitinoldraht ausgebildet.

Es ist Aufgabe der vorliegenden Erfindung, eine lösbare Halteeinrichtung zum Halten eines zwischen einer abgesenkten Ruheposition und einer ausgefahrenen Stützposition verlagerbaren Überrollkörpers einer Überrollschutzvorrichtung für ein Kraftfahrzeug sowie eine Überrollschutzvorrichtung für ein Kraftfahrzeug, insbesondere ein Cabriolet-Fahrzeug, nach der eingangs genannten Art zu schaffen, wobei die Halteeinrichtung den Überrollkörper zuverlässig in seiner Ruheposition hält und auf einfache Weise mittels möglichst weniger und kostengünstig herzustellender Bauteile lösbar ist.

Erfindungsgemäß wird diese Aufgabe mit einer lösbaren Halteeinrichtung gemäß den Merkmalen des Patentanspruches 1 gelöst.

Demnach ist eine lösbare Halteeinrichtung zum Halten eines zwischen einer abgesenkten Ruheposition und einer ausgefahrenen Stützposition verlagerbaren Überrollkörpers einer Überrollschutzvorrichtung für ein Kraftfahrzeug in seiner Ruheposition mit einem schwenkbaren Verriegelungselement, welches mit einem Verriegelungselement-Gegenkörper des Überrollkörpers und einem Aktuator derart zusammenwirkt, dass es in Ruheposition des Überrollkörpers in Eingriff mit dem Verriegelungs-Gegenkörper steht und im Crash-Fall den Überrollkörper zur Überführung in dessen Stützposition freigibt, erfinderisch in der Weise ausgestaltet, dass das Verriegelungselement in Ruheposition durch einen im Crash-Fall aufschmelzbaren Schmelzeinsatz des Aktuators gehalten ist.

Die erfindungsgemäße Verwendung eines Schmelzeinsatzes zum Halten des Verriegelungselementes und zum Aufheben der Verriegelungsstellung im Crash-Fall gewährleistet auf einfache und kostengünstige Art und Weise eine zuverlässige und schnelle Auslösung des Überrollkörpers.

Da nur das schwenkbar gelagerte und in Ruheposition des Überrollkörpers in Eingriff mit dem Verriegelungselement-Gegenkörper stehende Verriegelungselement durch den Schmelzeinsatz gehalten werden muss, kann der Schmelzeinsatz auf wesentlich niedrigere Kräfte ausgelegt sein, als er zum direkten Halten des Überrollkörpers ausgelegt sein müsste.

Die entsprechend reduzierte Dimensionierung des Schmelzeinsatzes ermöglicht wiederum ein schnelles Aufschmelzen und damit Durchtrennen der hiermit verbundenen Bauteile, womit die Auslösung des Überrollkörpers in sehr kurzer Zeit erfolgen kann.

Der Schmelzeinsatz kann prinzipiell eine beliebige Form haben und z. B. plattenförmig, flachbandförmig oder stab- bzw. drahtförmig ausgebildet sein.

Auch das schwenkbare Verriegelungselement kann bei der erfindungsgemäßen Halteeinrichtung grundsätzlich in beliebiger Form ausgestaltet sein.

In einer vorteilhaften Ausgestaltung der Erfindung kann zwischen dem Verriegelungselement und dem Aktuator ein Sperrglied angeordnet sein, welches das Verriegelungselement in einer den Überrollkörper haltenden Sperrstellung hält oder freigibt.

Dabei kann es vorgesehen sein, dass das Sperrglied in Sperrstellung gegen einen Sitz, welcher durch den aufschmelzbaren Schmelzeinsatz des Aktuators gehalten ist, mittels eines Energiespeichers vorgespannt ist. Bei einem erkannten Crash kann der Sitz des Sperrglieds durch ein Aufschmelzen des Schmelzeinsatzes z. B. durch Anlegen einer speziell abgestimmten Stromspannung blitzartig aufgehoben werden, so dass das vorgespannte Sperrglied in Richtung des aufgehobenen Sitzes entweichen und das Verriegelungselement freigeben kann.

In einfacher Ausgestaltung kann der Energiespeicher als eine Feder ausgebildet sein, welche einenends an einem an dem Sperrglied ausgebildeten Federsitz und anderenends an einem gehäuseartigen Grundkörper abgestützt ist.

Um ein Herausfallen des Sperrglieds nach Aufheben des zuvor durch den Schmelzeinsatz gesicherten Sitzes bei einer Entspannung der Feder des Sperrglieds zu vermeiden und um die Reversierbarkeit einer Auslösung der Halteeinrichtung zu erleichtern, kann an dem Grundkörper ein Sperrgliedanschlag zur Begrenzung des Weges des Sperrglieds nach einem Lösen des Sitzes im Crash-Fall in einer dem Verriegelungselement abgewandten Richtung vorgesehen sein.

In einer sehr vorteilhaften Ausgestaltung der Erfindung kann der Sitz des Sperrglieds in Sperrstellung durch wenigstens zwei schwenkbar gelagerte Backenkörper gebildet sein, welche durch den Schmelzeinsatz miteinander verbunden sind. Die Verbindung zwischen den Backenkörpern wird somit im Crash-Fall aufgehoben, so dass diese durch die Krafteinwirkung des Sperrglieds auseinander geschwenkt werden können. Die Backenkörper, welche bei einer vorteilhaften Ausführung jeweils eine Keilfläche aufweisen können, welche zusammen den Sitz für das Sperrglied in Ruhelage des Systems bilden, können jeweils um einen Bolzen an dem Grundkörper schwenkbar gelagert sein.

Zur Reversierung des Systems nach einer erfolgten Auslösung können.die Backenkörper durch Einsetzen eines neuen Schmelzeinsatzes als Verbindungselement wieder miteinander verbunden werden.

Hierzu ist es vorteilhaft, wenn die Bolzen der Backenkörper an dem Grundkörper in entriegelnder Bewegungsrichtung des Sperrglieds entgegen der Kraft eines Energiespeichers verschiebbar gelagert sind, wobei die Kraft der auf die Bolzen wirkenden Energiespeicher insgesamt größer ist als die Kraft des auf das Sperrglied in entriegelndem Sinn wirkenden Energiespeichers.

Wenn die Backenkörper nach unten, d. h. entgegen der Auslöse-Bewegungsrichtung des Überrollkörpers, so weit gezogen werden, dass die Backenkörper unterhalb des entspannten Sperrglieds zusammengeschwenkt und durch Bestückung mit einem neuen Schmelzeinsatz verbunden werden können, drückt der somit erneut gebildete Sitz das Sperrglied entgegen der Kraft von dessen Energiespeicher in eine Stellung zurück, in der das Sperrglied das Verriegelungselement sperren kann.

Ein solcher Schritt erfolgt somit zweckmäßigerweise, sobald der Überrollkörper und das Verriegelungselement in eine der Ruhepositionen des Überrollkörpers entsprechende Stellung zurückbewegt, d. h. abgesenkt bzw. verschwenkt, sind.

Zur einfachen Reversierung des Systems kann alternativ zur Bewegung der Backenkörper entgegen zugeordneten mechanischen Energiespeichern auch eine Ausgestaltung des Sperrgliedes vorgesehen sein, bei der dieses mit teleskopartig ineinander verschiebbaren Sperrgliedteilen ausgebildet ist, zwischen denen ein Federelement angeordnet ist.

Das Sperrglied kann sich somit bei Aufheben des durch den Schmelzeinsatz bereitgestellten Sitzes in dessen Richtung entspannen. Zum Reversieren des Systems können die Sperrgliedteile wieder soweit zusammengedrückt werden, bis die das Sperrglied in Auslösestellung umgebenden Backenkörper das untere Ende des Sperrglieds wieder untergreifen sowie in einer den Sitz für das Sperrglied bildenden Stellung zusammengeschwenkt und durch Bestückung mit einem neuen Schmelzeinsatz verbunden werden können.

Das Sperrglied ist bei einer hinsichtlich des Bauraumbedarfs günstigen Ausgestaltung der Erfindung in Axialrichtung, insbesondere koaxial zur Bewegungsrichtung des Überrollkörpers, linear bewegbar.

Dabei kann das Sperrglied beispielsweise in einfacher Weise als ein Stift oder als ein flaches Blechelement ausgebildet sein.

In weiteren Ausführungen kann jedoch auch eine Bewegungsrichtung des Sperrglieds im Wesentlichen senkrecht zur Bewegungsrichtung des Überrollkörpers vorgesehen sein.

Das Sperrglied kann auch schwenkbar angeordnet sein, so dass das Sperrglied bei Aufschmelzen des Schmelzeinsatzes in eine das Verriegelungselement außer Eingriff mit dem Verriegelungselement-Gegenkörper bringende Stellung schwenkt.

Das Verriegelungselement kann, insbesondere bei Verwendung eines separaten Sperrglieds, scheibenartig ausgebildet sein und neben einem Klinkenabschnitt eine umfangsseitige Ausnehmung, in die das Sperrglied in Ruheposition eingreift, und einen umfangsseitigen Anschlag, an dem das zur Überführung des Überrollkörpers in dessen Stützposition aus der Ausnehmung bewegte Sperrglied nach einer den Klinkenabschnitt aus Eingriff mit dem Verriegelungs-Gegenkörper bringenden Rotation des Verriegelungselementes anliegt, aufweisen.

Wenn seitlich des Sperrglieds ein Widerlager zur Aufnahme von seitens des Verriegelungselementes und dessen Anschlags auf das Sperrglied in gelöstem Zustand der Halteeinrichtung ausgeübten Kräfte vorgesehen ist, kann das Sperrglied beliebig lang ausgeführt sein, ohne dass die Gefahr eines Verkippens des Sperrgliedes gegeben ist.

Ein solches scheibenartiges Verriegelungselement kann die Hebel eines Doppelhebelsystems, wie es z. B. aus der DE 197 50 693 C2, der DE 198 30 407 A1 oder der DE 199 37 150 A1 bekannt ist und grundsätzlich in Verbindung mit einem Schmelzeinsatz gemäß der Erfindung angewandt werden kann, ersetzen, wobei das erfindungsgemäße Verriegelungselement ohne Federeinrichtung gegenüber dem Sperrglied des Aktuators gelagert werden kann.

In einer vorteilhaften Ausgestaltung der Erfindung wird die Drehachse des Verriegelungselements durch einen Bolzen gebildet, welcher an gegenüberliegenden Seiten des gehäuseartigen Grundkörpers gelagert ist.

Unter dem Begriff "Grundkörper" wird in Zusammenhang mit der beschriebenen Erfindung allgemein jede Art von Gehäuse oder fahrzeugfestem Träger verstanden, welcher auch offen in der Art eines Käfigs oder Haltebügels ausgebildet sein kann und mit dem die Halteeinrichtung an beliebigen karosseriefesten Bauelementen einer Überrollschutzvorrichtung oder der Karosserie selbst angeordnet werden kann.

In einer besonders einfachen Ausgestaltung der erfindungsgemäßen Halteeinrichtung kann der Grundkörper im Wesentlichen als ein U-Körper ausgebildet sein.

Bei einer Ausführung ohne separatem Sperrglied kann das Verriegelungselement gegebenenfalls direkt gegen einen Sitz, welcher durch einen aufschmelzbaren Schmelzeinsatz in Ruhelage des Systems gehalten ist, gedrückt sein. Wenn an dem Verriegelungselement andererseits in Rotationsrichtung die Zugkraft des vorgespannten Überrollkörpers oder eines Vorspannelements angreift, wird durch die Aufhebung des Sitzes in Folge eines Aufschmelzens des Schmelzeinsatzes eine die Halteeinrichtung lösende Rotationsbewegung des Verriegelungselementes ermöglicht.

Bei einer alternativen Ausführungsform kann das Verriegelungselement in Ruheposition in Rotationsrichtung radial derart mit einem Grundkörper durch einen Schmelzeinsatz verbunden sein, dass es eine Zugkraft gegenüber dem Grundkörper ausübt, wobei der Grundkörper ein Ende des Schmelzeinsatzes und das Verriegelungselement das andere Ende des Schmelzeinsatzes trägt.

In einer weiteren vorteilhaften Ausgestaltung der Erfindung kann das schwenkbar gelagerte Verriegelungselement hebelartig ausgebildet sein, vorzugsweise im Wesentlichen C-förmig, wobei ein Hebelende einen Klinkenabschnitt zum Eingriff mit dem Verriegelungselement-Gegenkörper bildet und das andere Hebelende mit dem Sperrglied verbunden ist, und wobei ein Endbereich des Sperrgliedes auslenkbar mit dem Verriegelungselement verbunden ist und ein entgegengesetzter Endbereich des Sperrgliedes in Ruhelage des Überrollkörpers gegen einen Sitz gedrückt ist, von dem das Sperrglied bei Aufschmelzen des Schmelzeinsatzes durch den Aktuator in eine Rotation des Verriegelungselements freigebende Position bewegbar ist.

Mit einer solchen Ausgestaltung wird ebenfalls ein einfaches, ohne großen Präzisionsaufwand zu fertigendes Verriegelungssystem bereitgestellt.

In besonders einfacher Ausgestaltung kann hierbei vorgesehen sein, dass das Sperrglied bei Aufschmelzen des Schmelzeinsatzes durch einen Schlagbolzen des Aktuators in eine eine Rotation des Verriegelungselementes freigebende Position bewegbar ist, wobei der Schlagbolzen in Bereitschaftsstellung durch ein Federelement vorgespannt ist und durch den Schmelzeinsatz gehalten ist.

Eine weitere Ausführungsalternative des Verriegelungselementes kann vorsehen, dass dieses schwenkbar gelagert und hebelartig sowie wenigstens zweiteilig ausgebildet ist, wobei ein erstes Hebelelement und ein zweites Hebelelement jeweils im Wesentlichen L-förmig ausgebildet sind und mit ihren einander zugewandten L-Schenkeln um eine gemeinsame Drehachse schwenkbar sind, und wobei das erste Hebelelement mit einem dem Verriegelungselement-Gegenkörper zugewandten Hebelende einen Klinkenabschnitt zum Eingriff mit dem Verriegelungselement-Gegenkörper bildet und das zweite Hebelelement mit einem dem ersten Hebelelement abgewandten Hebelende mit dem bei Aufschmelzen des Schmelzeinsatzes wegschwenkbaren Sperrglied verbunden ist.

Insbesondere bei den letztgenannten Ausgestaltungsmöglichkeiten für das schwenkbar gelagerte Verriegelungselement kann der Verriegelungselement-Gegenkörper hantelartig mit jeweils einer Querschnittsvergrößerung an einem Ende ausgebildet sein, wobei der Verriegelungselement-Gegenkörper mit einer Querschnittsvergrößerung in einem Kanal des Überrollkörpers geführt ist und mit der anderen Querschnittsvergrößerung in Ruhestellung des Überrollkörpers mit dem Verriegelungselement in Eingriff steht.

Die beschriebenen Ausgestaltungen einer lösbaren Halteeinrichtung und einer hiermit ausgestatteten Überrollschutzvorrichtung gemäß der Erfindung ermöglichen sämtlich eine sichere und kostengünstige Verriegelung des Überrollkörpers in seiner Ruheposition, wobei die Halteeinrichtung vorteilhafterweise mit wenigen ohne großen Präzisionsaufwand zu fertigenden Bauteilen realisiert werden kann.

Weitere Vorteile und vorteilhafte Ausgestaltungen einer lösbaren Halteeinrichtung und einer Überrollschutzvorrichtung gemäß der Erfindung sind der Beschreibung, der Zeichnung und den Patentansprüchen entnehmbar.

Mehrere Ausführungsbeispiels einer lösbaren Halteeinrichtung für eine Überrollschutzvorrichtung eines Cabriolet-Kraftfahrzeuges gemäß der Erfindung sind in der Zeichnung schematisch vereinfacht dargestellt und werden in der nachfolgenden Beschreibung näher erläutert.

Es zeigt:
- Fig. 1: eine vereinfachte dreidimensionale Darstellung einer ersten Ausführung einer Halteeinrichtung für einen Überrollkörper eines Überrollschutzsystems in dessen verriegeltem Ruhezustand;
- Fig. 2: eine teilweise geschnittene dreidimensionale Darstellung der Halteeinrichtung der Fig. 1 nach einer Auslösung und Verlagerung des Überrollkörpers in dessen ausgefahrene Stützposition;
- Fig. 3: eine Seitenansicht der Halteeinrichtung gemäß Fig. 2 nach deren Auslösung und Verlagerung des Überrollkörpers in dessen ausgefahrene Stützposition;
- Fig. 4: eine Vorderansicht einer hinsichtlich der Reversierbarkeit modifizierten Ausführung der in Fig. 1 bis Fig. 3 gezeigten Halteeinrichtung für einen Überrollkörper in einer Reversierlage;
- Fig. 5: eine Schnittdarstellung eines alternativ ausgestalteten Sperrglieds für eine Halteeinrichtung gemäß Fig. 1 bis Fig. 4;
- Fig. 6: eine ausschnittsweise Vorderansicht einer gegenüber den Ausführungen nach Fig. 1 bis Fig. 4 hinsichtlich des Sperrglieds modifizierten Ausführung einer Halteeinrichtung für einen Überrollkörper in dessen verriegeltem Ruhezustand;
- Fig. 7: eine teilweise geschnittene und bereichsweise Seitenansicht der Halteeinrichtung gemäß Fig. 6 nach einer Auslösung und Überführung des Überrollkörpers in dessen Stützposition;
- Fig. 8: eine vereinfachte dreidimensionale Darstellung einer weiteren Ausführungsvariante einer Halteeinrichtung für einen Überrollkörper eines Überrollschutzsystems in dessen verriegeltem Ruhezustand;
- Fig. 9: eine vereinfachte perspektivische Darstellung der lösbaren Halteeinrichtung der Fig. 8 bei einer Auslösung und Freigabe des Überrollkörpers zur Überführung in dessen Stützposition;
- Fig. 10: eine vereinfachte Vorderansicht der lösbaren Halteeinrichtung gemäß Fig. 8 und Fig. 9 in einer Reversierlage;
- Fig. 11: eine vereinfachte Seitenansicht einer weiteren Ausgestaltung einer lösbaren Halteeinrichtung für den hier im Ruhezustand dargestellten Überrollkörper eines Überrollschutzsystems;
- Fig. 12: eine vereinfachte perspektivische Darstellung der lösbaren Halteeinrichtung der Fig. 11 bei verriegeltem Ruhezustand des Überrollkörpers;
- Fig. 13: eine vereinfachte perspektivische Darstellung der lösbaren Halteeinrichtung gemäß Fig. 11 und Fig. 12 nach einer Freigabe des Überrollkörpers zur Überführung in dessen Stützposition;
- Fig. 14: eine vereinfachte perspektivische Darstellung eines Aktuators der lösbaren Halteeinrichtung gemäß der Fig. 11 bis Fig. 13, wobei der Aktuator in einer Bereitschaftsstellung bei verriegeltem Ruhezustand des Überrollkörpers dargestellt ist;
- Fig. 15: den Aktuator der Fig. 14 bei einer Auslösung des Überrollschutzsystems;
- Fig. 16: eine vereinfachte dreidimensionale Ansicht einer weiteren Ausführungsvariante einer lösbaren Halteeinrichtung für einen Überrollkörper eines Überrollschutzsystem in Alleinstellung, wobei die Halteeinrichtung in einem verriegelten Ruhezustand des Überrollkörpers dargestellt ist; und
- Fig. 17: eine vereinfachte dreidimensionale Darstellung der lösbaren Halteeinrichtung gemäß Fig. 16 bei einer Auslösung des Überrollschutzsystems.

Die Figuren der Zeichnung zeigen in vereinfachter Darstellung jeweils eine Halteeinrichtung 110, 210, 310, 410, 510 zum Halten eines Überrollkörpers 2 eines Überrollschutzsystems 1 eines Cabriolet-Fahrzeuges, wobei der Überrollkörper und das Überrollschutzsystem vereinfacht jeweils mit den Bezugszeichen 2 bzw. 1 bezeichnet sind.

Der nur symbolisch und ausschnittsweise dargestellte Überrollkörper 2 ist auf an sich bekannte Art und Weise in einer abgesenkten Ruhelage mit Druck beispielsweise durch eine vorgespannte Druckfeder beaufschlagt, so dass er nach einem Lösen der Halteeinrichtung von einer abgesenkten Ruhelage in eine ausgefahrene obere Stützposition verlagert wird.

Die Halteeinrichtung 110, 210, 310, 410, 510 umfasst jeweils ein um eine feste Drehachse 112, 212, 312, 412, 512 schwenkbar gelagertes Verriegelungselement 114, 214, 314, 414, 514, welches an seinem Umfang einen Klinkenabschnitt 116, 216, 316, 416, 516 aufweist, welcher zum Zusammenwirken mit einem Verriegelungselement-Gegenkörper 118, 218, 318, 418, 518 an dem Überrollkörper 2 ausgelegt ist.

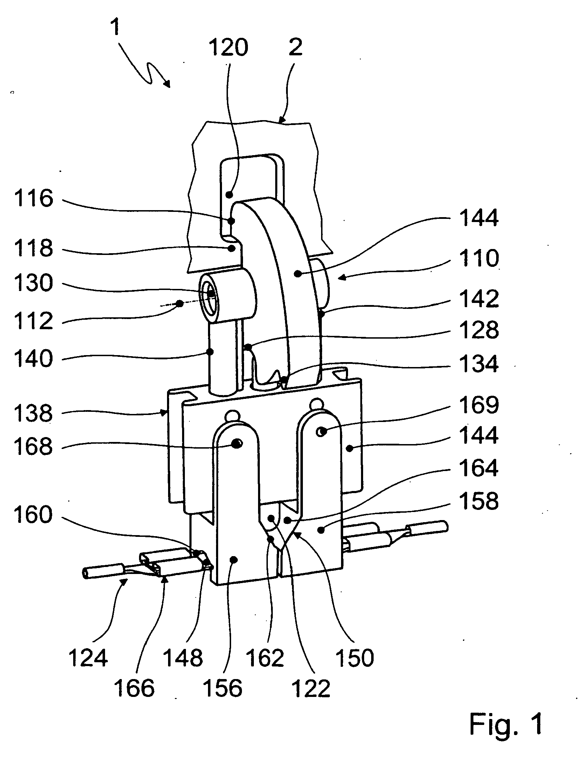

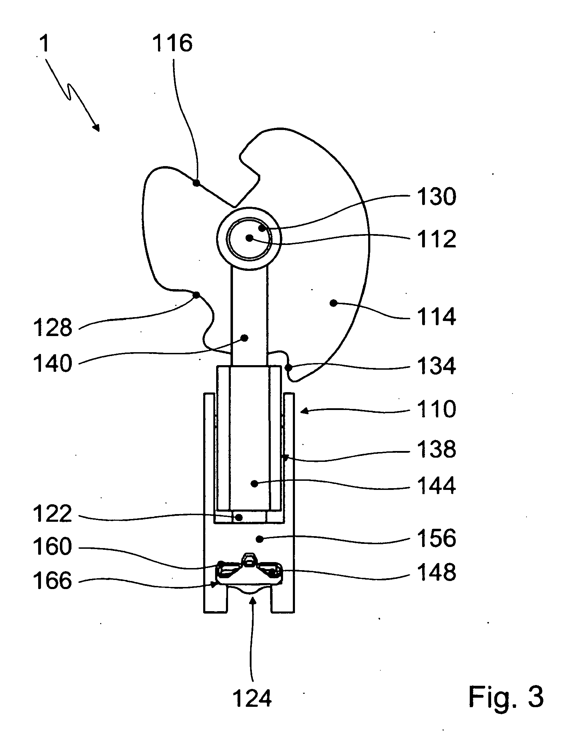

Bei den Ausführungen gemäß Fig. 1 bis Fig. 7 ist der Verriegelungselement-Gegenkörper 118, 218 in einfacher Weise als eine Haltelasche unterhalb einer Ausnehmung 120, 220 an dem Überrollkörper 2 ausgebildet. Die Dimensionierung und Formgebung der Haltelasche 118, 218 und einer U-Ausnehmung des Klinkenabschnitts 116, 216 ist hier derart aufeinander abgestimmt, dass die Haltelasche 118, 218 bei einer Rotation des Verriegelungselements 114, 214 um dessen Drehachse 112, 212 problemlos aus dem Klinkenabschnitt 116, 216 gleiten kann.

In alternativen Ausführungen kann statt der hier vorgesehenen Haltelasche auch ein Bolzen, ein Absatz an dem Überrollkörper oder ein geeignetes Hakenelement als Verriegelungselement-Gegenköper vorgesehen sein.

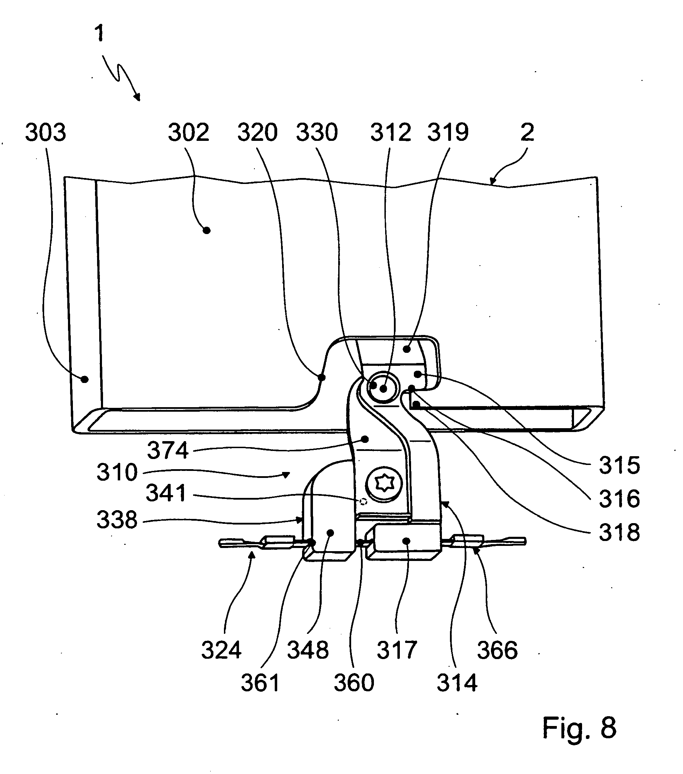

Bei der Ausführung gemäß Fig. 8 bis Fig. 10 ist z. B. der Verriegelungselement-Gegenkörper 318 als ein Absatz im Bereich einer zum unteren Rand des Überrollkörpers 2 hin offenen Ausnehmung 320 an dem Überrollkörper 2 ausgebildet, wobei die Ausnehmung 320, der Absatz 318 und der Klinkenabschnitt 316 des Verriegelungselements 314 auch hier derart aufeinander abgestimmt gestaltet sind, dass das Verriegelungselement 314 bei einer Rotation um dessen Drehachse 312 ohne Weiteres aus Eingriff mit dem Klinkenabschnitt 316 gebracht werden kann.

Bei allen gezeigten Ausführungen ist der Überrollkörper 2 in seiner abgesenkten Ruhelage durch den Eingriff des Verriegelungselements 114, 214, 314, 414, 514 mit dem Verriegelungselement-Gegenkörper 118, 218, 318, 418, 518 gehalten, und kann durch Betätigung eines Aktuators 124, 324, 424, 524 ausgelöst werden, indem der Aktuator 124, 324, 424, 524 eine zumindest bereichsweise Rotation des Verriegelungselements 114, 214, 314, 414, 514 ermöglicht, so dass dieses außer Eingriff mit dem Verriegelungselement-Gegenkörper 118, 218, 318, 418, 518 gerät.

Erfindungsgemäß ist bei den vorliegenden Ausführungen das jeweilige Verriegelungselement 114, 214, 314, 414, 514 durch einen im Crash-Fall aufschmelzbaren Schmelzeinsatz 148, 348, 448, 548 des Aktuators 124, 324, 424, 524 in seiner den Überrollkörper 2 verriegelnden Ruhestellung gehalten.

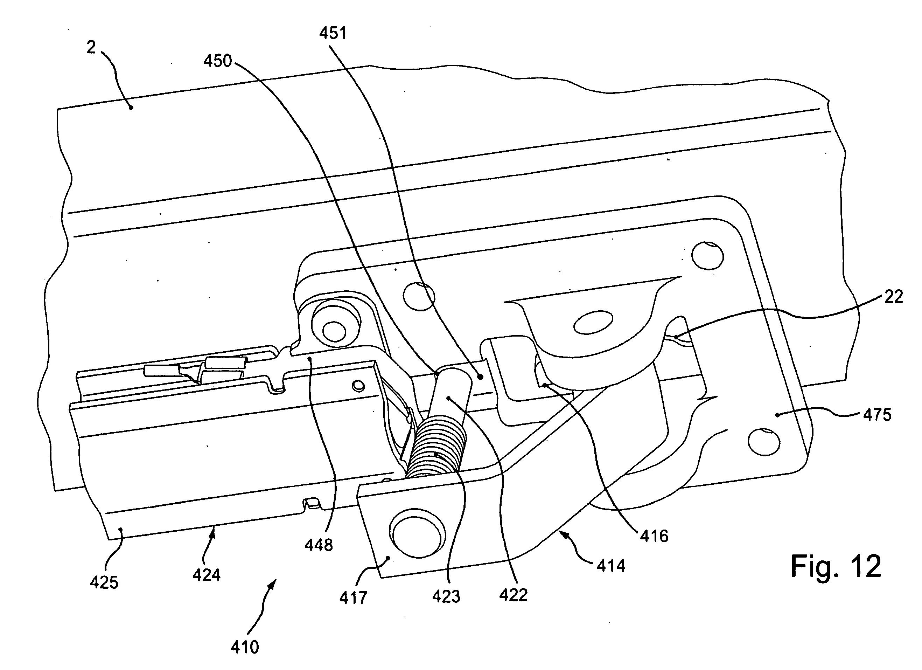

Bei den Ausführungen gemäß Fig. 1 bis Fig. 7 und Fig. 11 bis Fig. 17 ist zwischen dem Verriegelungselement 114, 214, 414, 514 und dem Aktuator 124, 224, 424, 524 ein Sperrglied 122, 222, 422, 522 angeordnet, welches das Verriegelungselement 114, 214, 414, 514 in einer den Überrollkörper 2 haltenden Sperrstellung hält oder freigibt. Das Sperrglied 122, 222, 422, 522 ist dabei in einer Sperrstellung, in der es das Verriegelungselement 114, 214, 414, 514 gegen eine die Halteeinrichtung 110, 210, 410, 510 lösende Rotation sichert, gegen einen Sitz 150, 450, 550 gedrückt.

Bei einer Ausgestaltung gemäß Fig. 1 bis Fig. 7 ist der Sitz 150 durch den aufschmelzbaren Schmelzeinsatz 148 des Aktuators 124 bereitgestellt bzw. gesichert. Eine Vorspannung des Sperrglieds 122, 222 entgegen dem Sitz 150 wird durch einen jeweils als Feder 132, 232 ausgebildeten mechanischen Energiespeicher aufgebracht.

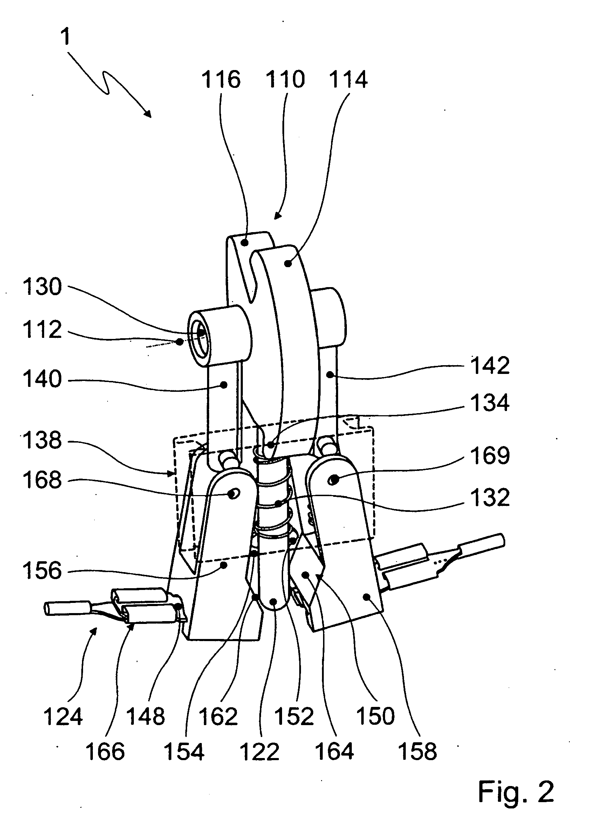

Bei den Ausführungen gemäß Fig. 1 bis Fig. 5 ist die Feder 132, welche das hier im Wesentlichen in der Form eines Stiftes ausgeführte Sperrglied 122 bzw. 122' vorspannt, an dem Außenumfang des Stiftes 122, 122' an einem hieran ausgebildeten Federsitz 152 und mit ihrem entgegengesetzten Ende an einen gehäuseartigen Grundkörper 138 bzw. 238, welcher in Fig. 2 teilweise nur strichliert angedeutet ist, abgestützt.

Der Federsitz 152 an dem Sperrglied 122 ist bei den in den Fig. 1 bis Fig. 4 gezeigten Ausführungen durch nasenartige Abquetschungen am Umfang des Stiftes 122 ausgebildet, jedoch kann der Federsitz bei alternativen Ausführungen auch durch einen Ring oder einen Absatz an dem Sperrglied gebildet sein.

In Ruheposition des Überrollkörpers 2 greift das Sperrglied 122, 122' oder 222 mit seinem dem Überrollkörper 2 zugewandten Ende in eine umfangsseitige Ausnehmung 128, 228 des scheibenartigen Verriegelungselements 114, 214 ein, womit die Ausnehmung 128, 228 eine Verriegelungsraste bildet, welche vorliegend in Ruheposition des Überrollkörpers 2 koaxial zu einer Längsachse des Sperrgliedes 122, 122' bzw. 222 und der Bewegungsrichtung des Überrollkörpers 2 ausgerichtet ist und sich in Richtung eines die Drehachse 112, 212 des Verriegelungselements 114, 214 bildenden, exzentrisch angeordneten Bolzens 130, 230 im Wesentlichen rechtwinklig zur Ausrichtung der U-förmigen Ausnehmung des Klinkenabschnitts 116, 216 erstreckt.

Der Aktuator 124 wird bei einer von einer Sicherheitssensorik des Cabriolet-Fahrzeugs erkannten Unfallsituation von einem zugeordneten Steuergerät angesteuert, wobei der Schmelzeinsatz 148 des Aktuators 124 im Crash-Fall bis zum vollständigen Aufschmelzen oder bis zu einem für ein Reißen des Schmelzeinsatzes 148 ausreichenden Aufschmelzen erhitzt wird, so dass der Schmelzeinsatz 148, 248 durchtrennt wird und eine translatorische Bewegung des Sperrglieds 122, 122' oder 222 in Richtung des nun aufgehobenen Sitzes 150 erfolgt.

Zur Begrenzung des Weges des Sperrglieds 122, 122', 222 in einer dem Verriegelungselement 114, 214 abgewandten Richtung nach einem Lösen des Sitzes 150 im Crash-Fall ist an dem gehäuseartigen Grundkörper 138, 238 ein Sperrgliedanschlag ausgebildet. Der Sperrgliedanschlag 154 für den Federsitz 152 des Stiftes bzw. Sperrglieds 122 ist symbolisch in Fig. 2 angedeutet.

Das Sperrglied 122, 122', 222 wird durch die translatorische Bewegung in Richtung des Aktuators 124 aus der umfangsseitigen Ausnehmung 128, 228 an dem scheibenartigen Verriegelungselement 114, 214 bis zu einem vordefinierten, durch Anschlag vorgegeben Punkt herausgezogen, womit dieses in Folge der über die Haltelasche 118, 218 des Überrollkörpers 2 ausgeübten Zugkraft eine Rotationsbewegung ausführt.

Zur Begrenzung dieser Rotationsbewegung ist am Umfang des scheibenartigen Verriegelungselementes 114, 214 ein Anschlag 134, 234 ausgebildet, an dem das bei Auslösung der Halteeinrichtung aus der Ausnehmung 128 zurückgezogene Sperrglied 122, 122', 222 nach einer den Klinkenabschnitt 116, 216 aus Eingriff mit der Haltelasche 118, 218 bringenden Rotation des Verriegelungselementes 114, 214 zur Anlage kommt.

Bei den in den Fig. 1 bis Fig. 7 gezeigten Ausführungen ist eine Verschwenkung des Verriegelungselements 114, 214 um die Drehachse 112, 212 um ca. 30° zur Auslösung der Halteeinrichtung 110, 210 ausreichend. Folglich ist die Umfangskontur des Verriegelungselements 114, 214 in einem Bereich von annähernd 30° in einem Bereich anschließend an die umfangsseitige Ausnehmung 128, 228 entgegen der auslösesinnigen Drehrichtung des Verriegelungselements 114, 214 radial zurückgenommen bis zu dem umfangsseitigen Anschlag 134, 234.

Der Anschlag 134, 234, der nach Auslösung der Halteeinrichtung 10 das scheibenartige Verriegelungselement 114, 214 im Zusammenwirken mit dem Sperrglied 122, 122', 222 in Position hält, erleichtert bei einer eventuellen Fehlauslösung eine einfache Reversierung des Überrollschutzsystems.

Das Verriegelungselement 114, 214 stellt somit eine Zweistufenscheibe dar, bei der die Anordnung und Dimensionierung der Ausnehmung 128, 228 und des Anschlags 134, 234 je nach Anordnung und Gestaltung des Aktuators 124, 224 und des Sperrglieds 122, 122', 222 zu wählen sind.

In von den in den Fig. 1 bis Fig. 7 gezeigten Ausführungen abweichenden Ausführungsvarianten kann beispielsweise vorgesehen sein, dass der Anschlag für das Sperrglied an dem Verriegelungselement als ein Vorsprung an der Umfangskontur des Verriegelungselements ausgebildet ist, wobei der Anschlag auch als ein separates, an dem Verriegelungselement befestigtes Bauteil ausgeführt sein kann.

Ebenfalls abweichend von den gezeigten Ausführungsbeispielen kann der vorgesehene Rotationswinkel des Verriegelungselementes zwischen der verriegelten und entriegelten Stellung des Sperrglieds dem jeweiligen Anwendungsfall entsprechend gewählt werden.

Wie insbesondere den Fig. 1 bis Fig. 4 zu entnehmen ist, ist der durch den Schmelzeinsatz 148 gesicherte Sitz 150 für das Sperrglied 122 bzw. für das Sperrglied 222 der Ausführungen gemäß Fig. 1 bis Fig. 7 jeweils durch zwei schwenkbar gelagerte Backenkörper 156, 158 gebildet, welche durch den Schmelzeinsatz 148 miteinander verbunden sind. Die Backenkörper 156, 158 weisen an ihrer Unterseite jeweils eine nutartige Halterung 160 auf, in der jeweils ein Ende des hier plattenartig ausgeformten Schmelzeinsatzes 148 fest arretiert eingesetzt ist.

Die Backenkörper 156, 158 sind jeweils um einen an dem Grundkörper 138 bzw. 238 angeordneten Bolzen 130, 230 schwenkbar gelagert, so dass sie nach einem Aufschmelzen des Schmelzeinsatzes 148 durch die seitens des Sperrglieds 122 bzw. 222 auf den Sitz 150 ausgeübten Druckkraft auseinanderschwenken können, womit sie eine axiale Verlagerung des Sperrglieds 122, 222 in einer der Auslöse-Bewegungsrichtung des Überrollkörpers 2 entgegengesetzten Richtung ermöglichen.

Bei der in Fig. 1 bis Fig. 4 näher gezeigten Ausgestaltung weisen die Backenkörper 156, 158 zur Erleichterung der Axialbewegung des Sperrglieds 122 jeweils eine Keilfläche 162 bzw. 164 auf, wobei die Keilflächen 162, 164 bei intaktem Zustand des Schmelzeinsatzes 148 und Ruhelage des Überrollkörpers 2 zusammen den Sitz 150 für das Sperrglied 122 bilden.

Der Schmelzeinsatz 148 ist bei den Ausführungen gemäß Fig. 1 bis Fig. 7 jeweils mit einer Energiezuführeinrichtung 166 verbunden, um bei einer von einer Fahrzeugsensorik erkannten Crash-Situation ausreichend thermische Energie zur Aufschmelzung zu erhalten.

Bei den vorliegenden Ausführungen ist die Energiezuführeinrichtung 166 jeweils als eine zur Stromführung geeignete Klemme ausgebildet, welche mit einer nicht näher dargestellten Stromquelle verbunden ist. Durch elektrische Kontaktierung und Erzeugung eines Kurzschlusses zwischen den beiderseits des Schmelzeinsatzes 148 anliegenden Klemmen 166 kann schlagartig an dem Schmelzeinsatz 148 eine zu dessen Aufschmelzung erforderliche Hitze erzeugt werden.

Die Reversierung des Überrollschutzsystems 1, d. h. seine Rückführung von einer aktiven Stützposition mit ausgefahrenem Überrollkörper zu einer Ruheposition mit abgesenktem Überrollkörper 2 beispielsweise nach einer Fehlauslösung, kann auf einfache Weise durch ein Absenken des Überrollkörpers 2 in seine Ruheposition erfolgen, wonach das Verriegelungselement 114 bzw. 214 in sperrendem Sinne verdreht wird, bis der Klinkenabschnitt 116, 216 wieder in Eingriff mit der Haltelasche 118, 218 des zurückverlagerten Überrollkörpers 2 gelangt.

In dieser Position fluchtet die umfangsseitige Ausnehmung 128, 228 mit dem Sperrglied 122 bzw. 122', 222, welches in die umfangsseitige Ausnehmung 128, 228 eingeführt wird und das Verriegelungselement 114, 214 gegen Rotation sichert.

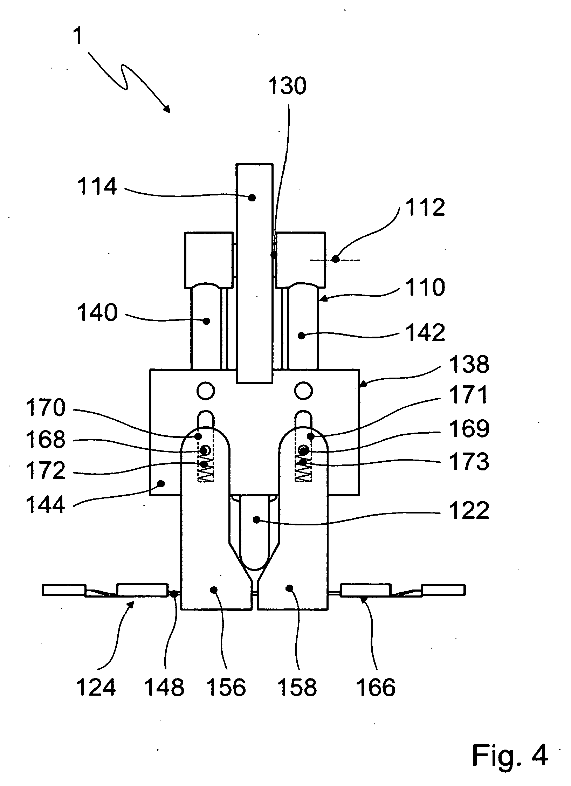

Zur Erleichterung der Reversierung kann die Lagerung der Backenkörper 156, 158 an dem gehäuseartigen Grundkörper 138 gemäß der in Fig. 4 gezeigten Ausführungsform gestaltet sein. Bei dieser Ausführungsform sind die an dem Grundkörper 138 bzw. 238 angeordneten Lagerbolzen 168, 169 in Langlöchern 170, 171 geführt, wobei sich die Langlöcher 170, 171 in Bewegungsrichtung des Sperrglieds 122 bzw. 222 erstrecken.

Innerhalb des gehäuseartigen Grundkörpers 138 ist, wie in Fig. 4 strichliert angedeutet ist, jeweils ein einem Lagerbolzen 168 bzw. 169 zugeordneter, als Druckfeder ausgebildeter mechanischer Energiespeicher 172, 173 angeordnet, welcher einer Verlagerung der Lagerbolzen 168, 169 und somit der um diese schwenkbaren Backenkörper 156, 158 in einer Bewegungsrichtung, welche der entriegelnden Bewegungsrichtung des Sperrglieds 122 entspricht, entgegenwirkt. Die Druckfedern 172, 173 sind dabei derart ausgelegt, dass ihre gemeinsame Federkraft größer ist als die Kraft des auf das Sperrglied 122 in entriegelndem Sinn wirkenden, durch die Feder 132 realisierten Energiespeichers.

Wenn nun die Backenkörper 156, 158 entgegen der Kraft der Druckfedern 172, 173 entlang der Langlöcher 170, 171 in entriegelnder Richtung des Sperrglieds 122 soweit nach unten gezogen werden, bis die Backenkörper 156, 158 wieder unterhalb des Sperrglieds 122 zusammengeschwenkt und mit einem neuen Schmelzeinsatz bestückt und somit verbunden werden, wird das Sperrglied 122 durch die wieder miteinander verbundenen und den Sitz 150 bildenden Backenkörper 156, 158 und die stärkere Federkraft der Federn 172, 173 entgegen dem Überrollkörper 2 verschoben und in die umfangsseitige Ausnehmung 128 des Verriegelungselements 114 eingerastet.

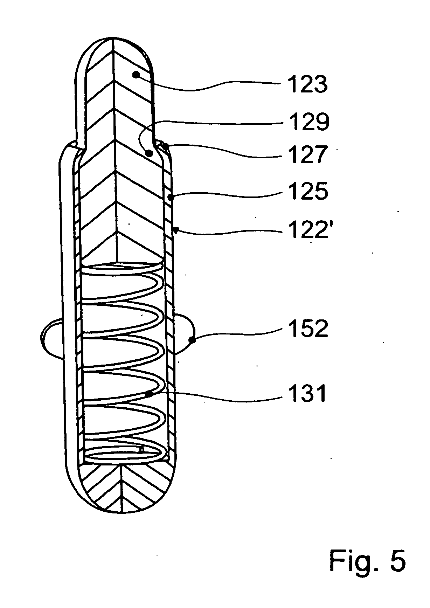

Die Fig. 5 zeigt eine alternative Ausgestaltung eines stiftförmigen Sperrglieds 122', welches die Aufgaben des Sperrglieds 122 gemäß den in den Fig. 1 bis Fig. 3 gezeigten Ausführungsvarianten erfüllt.

Bei der in Fig. 5 gezeigten Ausführung ist das Sperrglied 122' zweiteilig mit zwei teleskopartig ineinander verschiebbaren Sperrgliedteilen 123, 125 ausgebildet, wobei ein erstes Sperrgliedteil 123 im Wesentlichen als stiftartiger Vollkörper ausgebildet ist, welcher in dem zweiten im Wesentlichen als stiftartiger Hohlkörper ausgebildeten Sperrgliedteil 125 beweglich geführt ist. Durch eine als Bördelung 127 ausgeführte Querschnittverengung an dem als Hohlkörper ausgeformten Sperrgliedteil 125 und einen korrespondierenden Absatz 129 an dem als Vollkörper ausgebildeten Sperrgliedteil 123 kleineren Durchmessers sind die Sperrgliedteile 123, 125 gegen ein Auseinanderfallen gesichert.

Zwischen den Sperrgliedteilen 123, 125 ist eine Feder 131 in dem Innenraum des als Hohlkörper ausgebildeten Sperrgliedteils 125 vorgespannt eingebaut, wobei durch ein Zusammendrücken der Feder 131 eine Verkürzung der Länge des Sperrglieds 122' bis zu einem Grade erzielt werden kann, bei dem die Backenkörper 156, 158 ohne Längsverschiebung ihrer Lagerbolzen 168, 169 nach einer Auslösung der Halteeinrichtung 110 wieder zusammengeschwenkt und durch einen Schmelzeinsatz miteinander verbunden werden können. Bei einer Ausgestaltung des Sperrglieds gemäß der Fig. 5 erübrigen sich somit die Langlöcher 170, 171 und Druckfedern 172, 173 der Ausführung gemäß der Fig. 4.

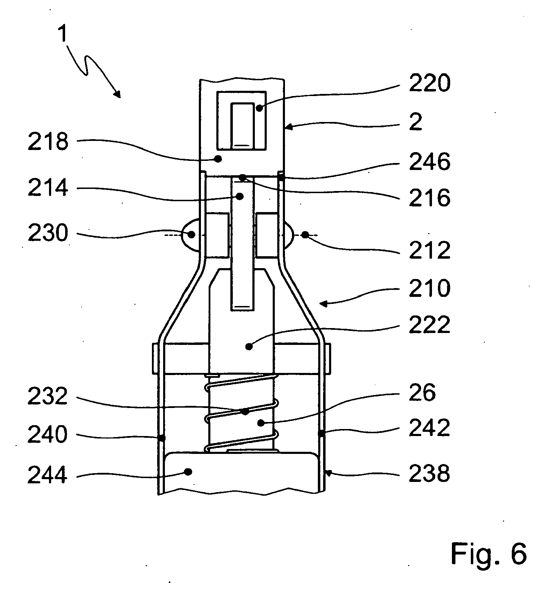

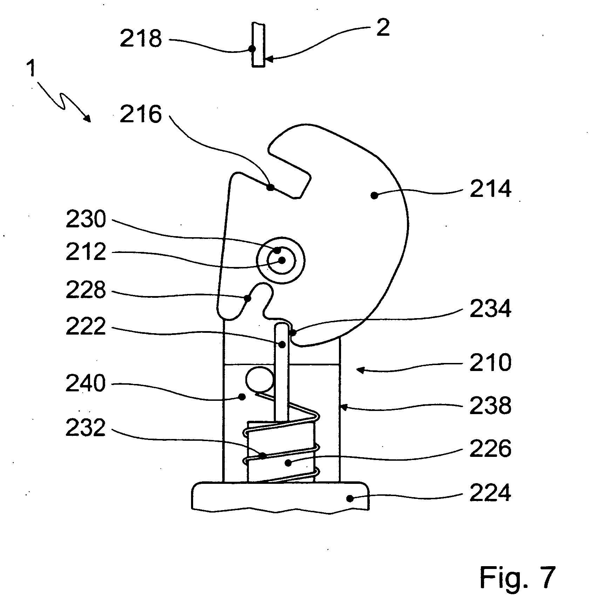

Wie unterschiedlich das Sperrglied ausgestaltet sein kann, zeigt auch die Ausbildungsvariante des Sperrglieds 222 gemäß Fig. 6 und Fig. 7.

Das Sperrglied 222 ist hier als ein flaches, zungenartiges Blechelement ausgebildet, welches auf einem zylindrischen, auf den Sitz 150 des Aktuators 124 wirkenden, axial beweglichen Kolben 126 befestigt ist.

Wie den Fig. 6 und Fig. 7 weiter zu entnehmen ist, ist seitlich des Sperrglieds 222 ein ebenfalls als Sitz der Feder 232 an dem Grundkörper 238 dienendes Widerlager 236 in Form eines Bolzens vorgesehen, welcher zur Aufnahme von Kräften dient, welche im gelösten Zustand der Halteeinrichtung 210 seitens des Verriegelungselements 214 und des Anschlags 234 auf das Sperrglied 222 seitlich ausgeübt werden. Mit Hilfe des Widerlagers 236 kann ein Verkippen des Sperrglieds 222 im gelösten Zustand der Halteeinrichtung 210 auch bei einer sehr langen Ausführung des Sperrglieds 222 vermieden werden.

Das Widerlager 236 ist wie der die Drehachse 212 bildende Bolzen 230 an dem ein Gehäuseelement darstellenden Grundkörper 238 der Halteeinrichtung 210 gelagert, wobei der Grundkörper 238 gegenüberliegende Seiten 240, 242 aufweist, zwischen denen der Bolzen 230 und das Widerlager 236 gelagert sind.

Bei den in den Fig. 1 bis Fig. 7 gezeigten Ausführungen ist der Grundkörper 138, 238, von dem in Fig. 7 nur eine Seite 240 dargestellt ist, in besonders einfacher Weise im Wesentlichen als ein U-Körper ausgebildet, dessen U-Schenkel als stangenartige Lagerträger 142, 144 mit hülsenartigen Enden wie bei der Ausgestaltung gemäß Fig. 1 bis Fig. 4 oder einfach als umgeformte Blechteile 240, 242 wie bei der Ausführung gemäß Fig. 6 und Fig. 7 ausgestaltet sein können.

Der Grundkörper 238 gemäß Fig. 6 und Fig. 7 weist vorliegend an seinem im Einbauzustand oberen Ende, d. h. an den freien Enden der Seiten 240, 242, jeweils eine rampenartige Führung 246 zum gesicherten Zuführen des Überrollkörpers 2 bzw. dessen Haltelasche 218 in den Eingriffsbereich mit dem Klinkenabschnitt 216 des Verriegelungselements 214 auf.

Bei jeder der beschriebenen Ausführungen erstreckt sich zwischen den U-Schenkeln des einen U-Körper bildenden Grundkörpers 138 bzw. 238 jeweils ein eine Traverse bildender Blockkörper 144 bzw. 244, welcher als Führung und axiale Wegbegrenzung des Sperrglieds 122, 122', 222 und Träger des Aktuators 124 dient.

Der gezeigte Grundkörper 138, 238 bildet somit eine Art Systemkäfig, welcher vorteilhafterweise bei wesentlich einfacherer Ausgestaltung die Aufgaben eines bei bekannten Ausführungen häufig recht aufwändig ausgeführten Gehäuses erfüllt und an unterschiedlichsten fahrzeugfesten Elementen , wie z. B. einer Sitzbankrückwand, befestigt werden kann.

Bezug nehmend auf die Fig. 8 bis Fig. 10 ist eine Ausführungsvariante einer lösbaren Halteeinrichtung 310 gezeigt, bei der das Verriegelungselement 314 in Ruheposition radial und auf Zug belastet über einen Schmelzeinsatz 348 mit einem Grundkörper 338 verbunden ist.

Das Verriegelungselement 314 ist bei diesem Ausführungsbeispiel hebelartig als eine Art Schwenkhebel ausgebildet. Dabei weist ein Hebelende 315 einen Klinkenabschnitt 316 zum Eingriff mit dem Verriegelungselement-Gegenkörper 318 und das andere Hebelende 317 eine Halterung 360 für den mit einer Energiezuführeinrichtung 366 verbundenen Schmelzeinsatz 348 auf.

Der Grundkörper 338 ist ein Blockelement mit einem im Wesentlichen L-förmigen Querschnitt, wobei ein L-Schenkel 339 eine Halterung 361 für den Schmelzeinsatz 348 mit einer Energiezuführeinrichtung 367 aufweist und der andere L-Schenkel 341 eine Lagerung 374 des schwenkbaren Verriegelungselements 314 mit dessen Lagerbolzen 330 trägt.

Die Lagerung 374 stellt ein mit dem L-Schenkel 341 des Grundkörpers 338 verdrehsicher verschraubtes Lagerblech dar, welches auf einer Seite des Grundkörpers 338 aufliegend mit diesem verschraubt ist und entgegen der Lagerung des Bolzens 330 des Verriegelungselements 314 S-förmig gebogen ist, so dass das Verriegelungselements 314, das Lagerblech 374 und der Lagerbolzen 330 in Axialrichtung des Lagerbolzens 330 eine Erstreckung aufweisen, welche im Wesentlichen der Tiefe des sich mit dieser Baugruppe axial überdeckenden Grundkörpers 338 entspricht. Somit weist die Halteeinrichtung 310 vorteilhafterweise eine sehr geringe Bautiefe auf.

Das Verriegelungselement 314 fluchtet bei der in den Fig. 8 bis Fig. 10 gezeigten Ausführung mit einer Seitenwand 302 des hier im Wesentlichen als Kastenprofil ausgebildeten, eine Kassette darstellenden Überrollkörpers 2 und greift gleichsam seitlich in eine zum unteren Rand hin offene Ausnehmung 320 des z. B. durch Federkraft vorgespannten Überrollkörpers 2 ein, wobei das Verriegelungselement 314 einen an der Kontur der Ausnehmung 320 ausgebildeten, nasenartigen Absatz 318, welcher den Verriegelungselement-Gegenkörper bildet, hintergreift.

Es versteht sich, dass der Fachmann je nach Anwendungsfall auch eine Anordnung der Halteeinrichtung 310 an einer Schmalseite 303 des Überrollkörpers oder einen Eingriff in eine Ausnehmung mit Haltelasche wählen kann.

Die Halterungen 360, 361 für den Schmelzeinsatz 348 sind auch hier als Nuten ausgebildet, in die der vorliegend plattenförmige Schmelzeinsatz 348 fest arretiert eingesetzt ist. Der Schmelzeinsatz 348 kann, wie auch bei den Ausführungen gemäß Fig. 1 bis Fig. 7, zur Arretierung eine auf die ihn haltenden Nuten abgestimmte Formgebung und zur schnelleren Aufschmelzbarkeit in seinem mittleren Bereich eine Querschnittsverengung aufweisen.

Die Energiezuführeinrichtung 367 zum Erzeugen der zum Schmelzen des Schmelzeinsatzes notwendigen Hitze ist auch bei dieser Ausführung zweckmäßig mittels an eine Stromquelle angeschlossener, an den Enden des Schmelzeinsatzes 348 befestigter Klemmen 365, 367 ausgeführt.

Das Material des Schmelzeinsatzes kann jedes für Schmelzsicherungen bekannte Material aus Metall und/oder Kunststoff darstellen.

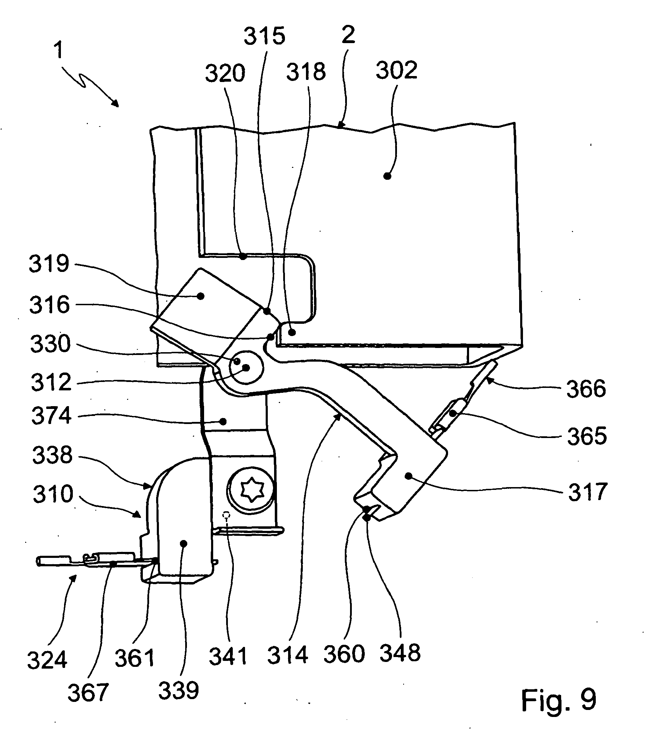

Wie insbesondere in Fig. 9 ersichtlich ist, wird bei einem Schmelzen und Durchtrennen des Schmelzeinsatzes 348 infolge der Stromzufuhr, welche von einem Steuergerät bei einer erkannten Crash-Situation eingestellt wird, der vorgespannte Überrollkörper von dem Verriegelungselement 314 freigegeben, indem das Verriegelungselement wegen der Zugbelastung seitens des ausfahrenden Überrollkörpers 2 verschwenkt wird, wobei der Klinkenabschnitt 316 außer Eingriff mit dem Absatz 318 gerät.

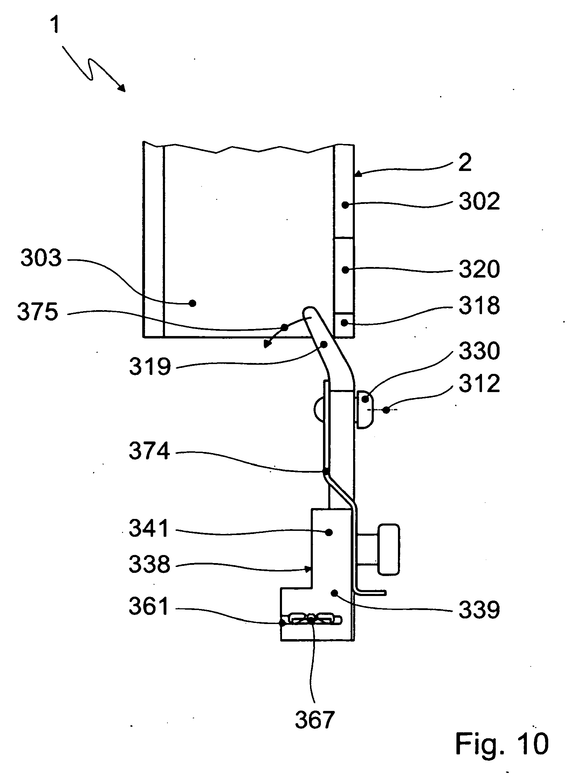

Die Reversierung des Überrollschutzsystems 1 mit einer Rückführung des ausgefahrenen Überrollkörpers 2 in dessen abgesenkte Ruheposition kann bei dem Ausführungsbeispiel gemäß Fig. 8 bis Fig. 10 auf einfache Weise durch ein Absenken des Überrollkörpers 2 in seine Ruheposition erfolgen, wobei der Überrollbügel 2 zunächst auf eine besonders deutlich in Fig. 10 ersichtliche, an der Oberkante des dem Überrollkörper 2 zugewandten Hebelendes 315 ausgebildete, in Axialrichtung des Lagerbolzens 330 des Verriegelungselements 314 verlaufende Schräge 319 des Verriegelungselements 314 trifft.

Das Verriegelungselement 314 ist zumindest abschnittsweise derart biegsam ausgebildet, dass der sich abwärts bewegende Überrollkörpers 2 bei einem Gleiten entlang der Schräge 319 mit dem Absatz 318 das Verriegelungselement 314 in Richtung des in Fig. 10 ersichtlichen Pfeiles 375 auslenkt bzw. wegbiegt, bis der Klinkenabschnitt 316 in die Ausnehmung 320 des Überrollkörpers 2 einrastet und diesen hält.

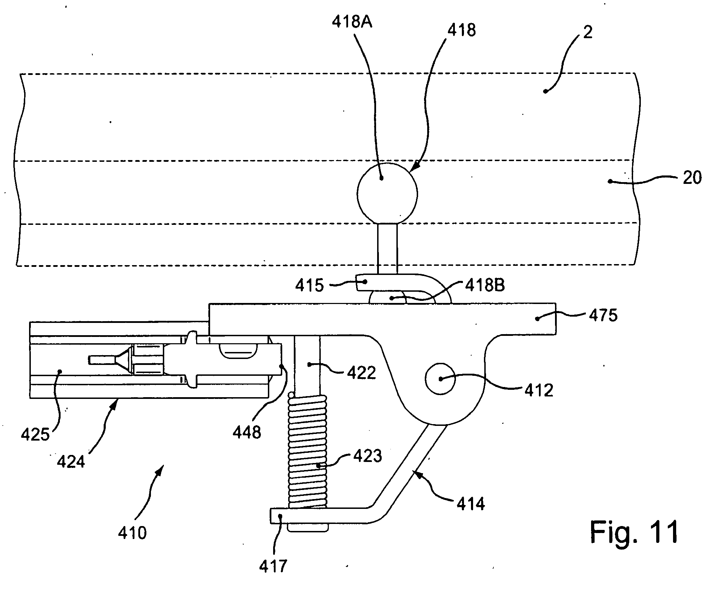

Bei der in den Fig. 11 bis Fig. 15 gezeigten Ausführungsvariante der lösbaren Halteeinrichtung 410 ist das Verriegelungselement 414 schwenkbar um eine mit einem Lagerbolzen realisierte Drehachse 412 an einem eine karosseriefeste Trägerstruktur darstellenden Grundkörper 475 gelagert ist. Das Verriegelungselement 414 ist bei dieser Ausführung hebelartig ausgebildet, wobei es im Querschnitt im Wesentlichen C-förmig ausgeformt ist.

Auch bei diesem Ausführungsbeispiel bildet auch hier ein Hebelende 415 des Verriegelungselementes 414 einen vorliegend gabelartig geformten Klinkenabschnitt 416 zum Eingriff mit dem Verriegelungselement-Gegenkörper 418, während das andere Hebelende 417 des Verriegelungselementes 414 mit dem Sperrglied 422 verbunden ist, welches das Verriegelungselement 414 in einer dem Überrollkörper 2 haltenden Sperrstellung hält oder bei Aufschmelzen des Schmelzeinsatzes 448 freigibt. Das Sperrglied 422 ist hierzu bei der Ausführung gemäß Fig. 11 bis Fig. 15 mit einem Endbereich über eine Feder 423 auslenkbar mit dem Verriegelungselement 414 verbunden und erstreckt sich in Ausfahrrichtung des Überrollkörpers 2 bis zu dem ihm für eine Sperrstellung zugeordneten Sitz 450 an dem mit karosseriefesten Teilen des Überrollschutzsystems verbundenen Grundkörper 475.

Der Grundkörper 475 weist hierzu an seiner in Einbaulage einem Fahrzeugboden zugewandten Seite eine Nut 451 auf, in der das Sperrglied 422 geführt ist und in der der Sitz 450 als ein Absatz ausgebildet ist. Die Nut 451 erstreckt sich in Auslenkungsrichtung des Sperrgliedes 422, welches bei Aufschmelzen des Schmelzeinsatzes 448 durch den Aktuator 424 unter Biegung der Feder 423 seitlich von dem Sitz 450 weg ausgelenkt wird.

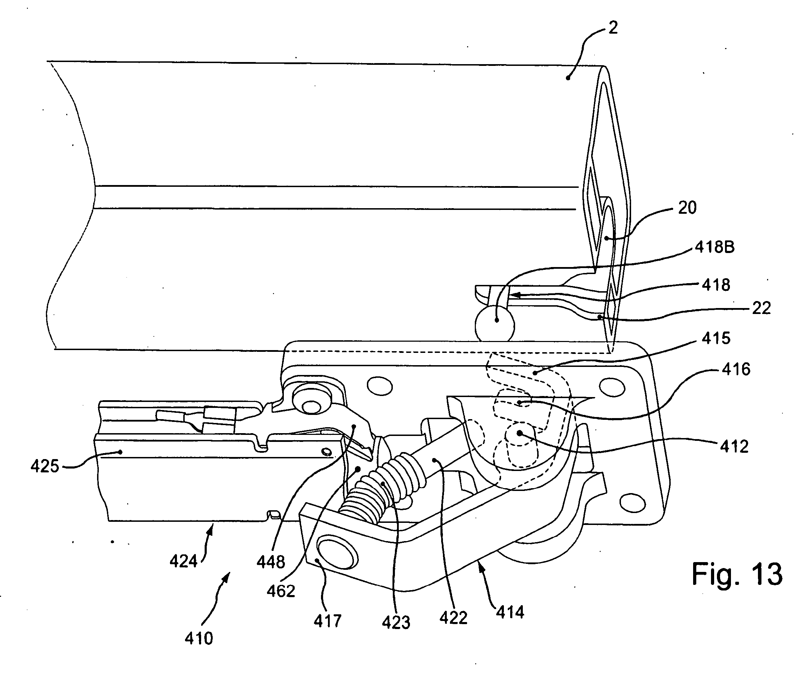

Durch eine solche in Fig. 13 näher dargestellte Auslenkung wird die Abstützung des Verriegelungselementes 414 an dem Grundkörper 475 aufgehoben, so dass der unter Federspannung in Ausfahrrichtung stehende Überrollkörper 2 mit dem Verriegelungselement-Gegenkörper 418 aus dem in Folge der in Ausfahrrichtung des Überrollkörpers 2 angreifenden Kraft in Rotation versetzten Verriegelungselement 414 bzw. dessen gabelartigen Klinkenabschnitt 416 gleitet.

Der Verriegelungselement-Gegenkörper 418 ist bei der Ausgestaltung gemäß Fig. 11 bis Fig. 15 hantelartig mit jeweils einer kugelförmigen Querschnittsvergrößerung 418A bzw. 418B an einem Ende ausgebildet, wobei der Verriegelungselement-Gegenkörper 418 mit einer Querschnittsvergrößerung 418A in einem Kanal 20 des Überrollkörpers 2 geführt ist und mit der anderen Querschnittsvergrößerung 418B in Ruhestellung des Überrollkörpers 2 mit dem Verriegelungselement 414 in Eingriff steht. Der hantelartige bzw. doppelkugelartige Verriegelungselement-Gegenkörper 418 kann seitlich in eine Quertraverse des Überrollkörpers 2 eingeführt sein oder auch von der Unterseite beispielsweise durch eine in Fig. 13 angedeutete schlüssellochartige Erweiterung 22, welche entsprechend dem Durchmesser der Querschnittsvergrößerung 418A des Verriegelungselement-Gegenkörpers 418 in dem Überrollkörper 2 dimensioniert ist, in dem Kanal 20 eingeführt sein.

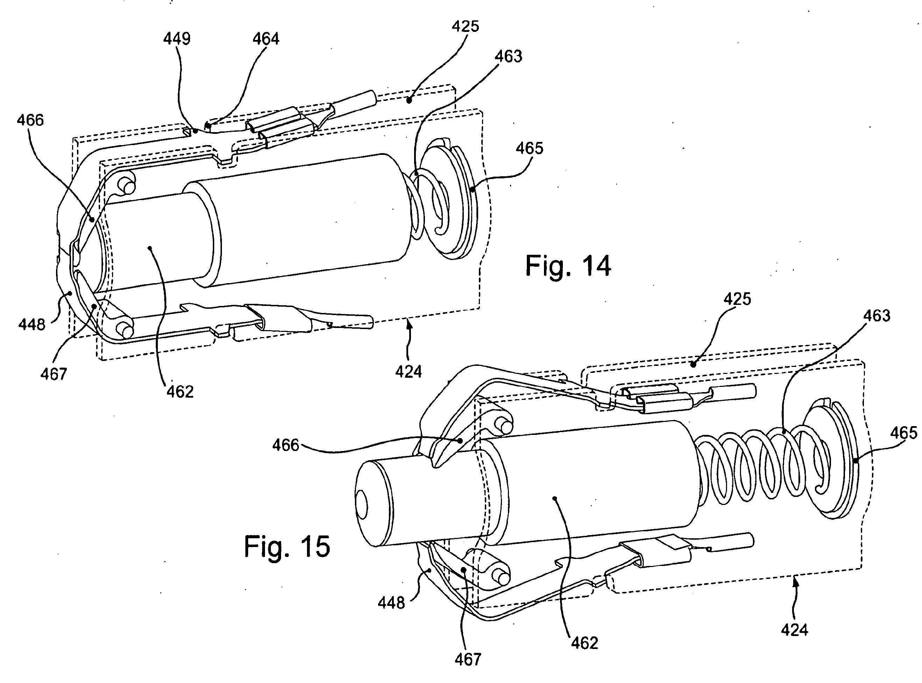

Die Auslenkung des Sperrgliedes 422 zur Auslösung und Freigabe des Überrollkörpers 2 erfolgt bei der Ausführung gemäß Fig. 11 bis Fig. 15 durch einen Schlagbolzen 462 des Aktuators 424, dessen Anordnung insbesondere in Fig. 14 und Fig. 15 dargestellt ist.

Wie der Fig. 14 und der Fig. 15 zu entnehmen ist, ist der Schlagbolzen 462 in einem Gehäuse 425 des Aktuators 424 in Bereitschaftsstellung unter der Vorspannung eines auf den Schlagbolzen 462 in dessen Axialrichtung wirkenden Federelement 463 eingesetzt und dabei durch eine U-Scheibe mit Sicherungsring 465 gegen ein Herausfallen gesichert. Der entgegen der Federkraft des Federelementes 463 in das Gehäuse 425 gedrückte und mit seinem vorderen Ende aus diesem herausragende Schlagbolzen 462 ist an seinem vorderen Ende durch zusammenschwenkbare Rückhaltearme 466, 467 vorgesichert, welche backenartig ausgebildet und an dem Gehäuse 425 des Aktuators 424 drehbar gelagert sind. Um die Rückhaltearme 466, 467 ist der vorliegend als Flachband ausgeführte Schmelzeinsatz 448 geführt, welcher die Rückhaltearme 466, 467 gegen ein Aufschwenken in Folge der Kraft des Schlagbolzens 462 und somit den Schlagbolzen 462 selbst in Bereitschaftsstellung sichert.

Die Funktion der Rückhaltearme 466, 467 besteht bei der gezeigten Ausführung in erster Linie darin, die seitens der Schlagbolzen 462 auf den Schmelzeinsatz 448 in Bereitschaftsstellung ausgeübte Spannung zu reduzieren, so dass der Schmelzeinsatz 484 selbst entsprechend dünn und mit geringem Energieaufwand durchtrennbar ausgelegt sein kann.

Je nach Anwendungsfall kann es auch vorteilhaft sein, die Spannung seitens des Schlagbolzens auf den Schmelzeinseinsatz in Bereitschaftsstellung weiter dadurch zu reduzieren, dass die Rückhaltearme in eine Umfangsseitige Nut des Schlagbolzens eingreifen, wobei sich der Drehpunkt der Rückhaltearme vorzugsweise in einem axialen Überdeckungsbereich mit der radial umlaufenden Aufnahmenut für die freien Enden der Rückhaltearme befindet.

Der flachbandartige Schmelzeinsatz 484 ist an dem Gehäuse 425 des Aktuators 424 über eine Querschnittsverbreiterung 449, welche in einer Nut 464 des Gehäuses 425 angeordnet ist, arretiert.

Bei der Ausführung gemäß Fig. 11 bis Fig. 15 ist der Schmelzeinsatz 448 in seiner Bereitschaftsstellung vorteilhafterweise einer kontinuierlichen Belastung ausgesetzt, da während des Fahrbetriebs von dem Federelement 463 ausgehende Schwingungen kompensiert werden können sowie eine Reduzierung der Spannungsbeaufschlagung durch die Rückhaltearme 466, 467 gegeben ist.

Bei einer Auslösung des Überrollschutzsystems wird der Schmelzeinsatz 484 durch elektrische Kontaktierung analog den Ausführungen gemäß Fig. 1 bis Fig. 10 mit einem abgestimmten Stromimpuls beaufschlagt und durch Aufschmelzen durchtrennt, womit der Schlagbolzen 462 in Folge der Entspannung des Federelementes 463 axial die Rückhaltearme 466, 467 und das durchtrennte Flachband des Schmelzeinsatzes 448 durchtritt und das Sperrglied 422 auslenkt, so dass der Überrollkörper 2 freigegeben wird.

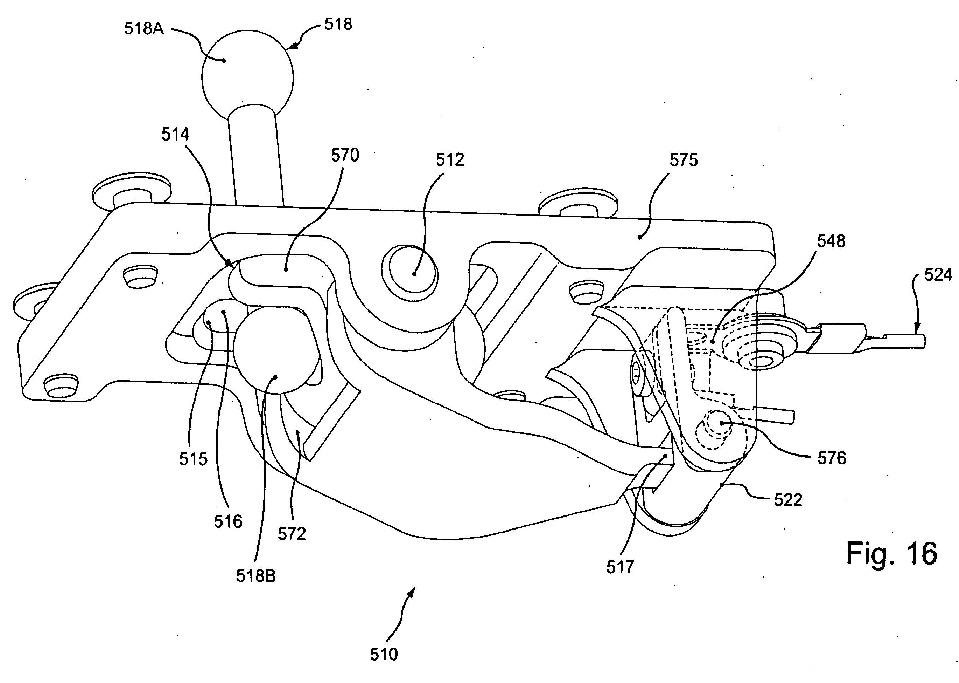

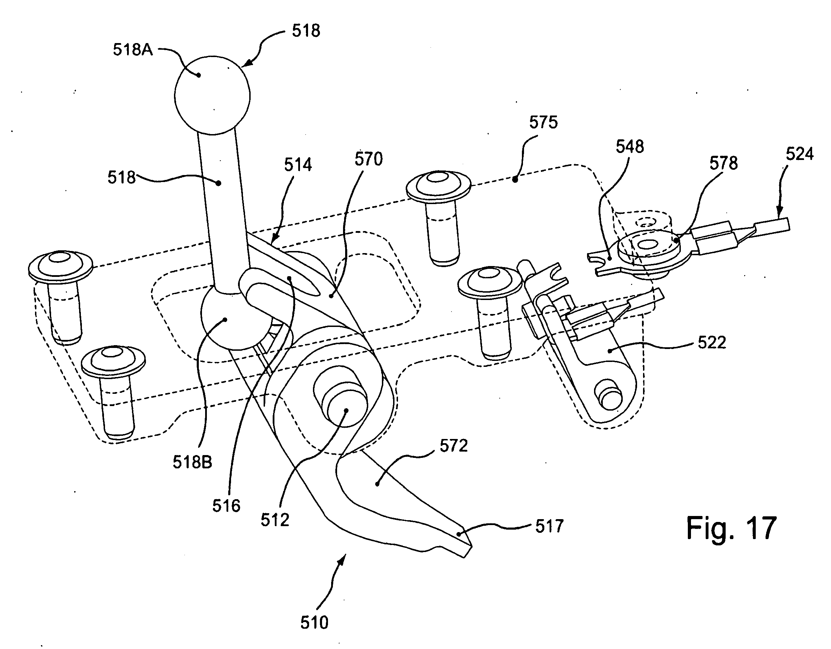

Bezug nehmend auf die Fig. 16 und Fig. 17 ist eine weitere Ausführungsvariante einer lösbaren Halteeinrichtung 510 gezeigt, bei der das schwenkbar gelagerte Verriegelungselement 514 wiederum hebelartig, jedoch hier zweiteilig mit einem ersten Hebelelement 570 und einem zweiten Hebelelement 572 ausgebildet ist.

Die Hebelelemente 570, 572 sind jeweils im Wesentlichen L-förmig ausgebildet und mit ihren einander zugewandten L-Schenkeln um einen eine gemeinsame Drehachse 574 bildenden Lagerbolzen schwenkbar gelagert. Das erste Hebelelement 570 ist an einem Hebelende 515, welches dem analog der Ausführung gemäß Fig. 11 bis Fig. 15 hantelartig ausgebildeten Verriegelungselement-Gegenkörper 518 zugewandt ist, mit einem gabelartigen Klinkenabschnitt 516 ausgebildet, in dem eine kugelförmige Querschnittserweiterung 518B des Verriegelungselement-Gegenkörpers 518 gehalten werden kann.

Das zweite Hebelelement 572 ist mit einem dem ersten Hebelelement 570 abgewandten Hebelende 517 mit dem Sperrglied 522 verbunden, wobei das Sperrglied 522 vorliegend um eine Rotationsachse 576 mit einem Lagerbolzen karosseriefest gelagert ist und bei Aufschmelzen des Schmelzeinsatzes 548 in eine eine Rotation des Verriegelungselements 514 freigebende Position schwenkt.

Zur Montage wird der in Fig. 16 und Fig. 17 nicht näher dargestellte Überrollkörper 2, welcher analog der Fig. 11 bis Fig. 15 ausgebildet sein kann, mit dem durch eine Querschnittserweiterung 518A in dem Überrollkörper 2 geführten Verriegelungselement-Gegenkörper 518 in Richtung eines Fahrzeugbodens entgegen der Halteeinrichtung 510 geführt. Dabei wird das zum Zusammenwirken mit dem Verriegelungselement 514 vorgesehene kugelartige Ende 518B des Verriegelungselement-Gegenkörpers 518 gegen den gabelartigen Klinkenabschnitt 516 des Verriegelungselementes 514 geführt, und das erste Hebelelement 517 wird mit dem Klinkenabschnitt 516 soweit nach unten verschwenkt, bis das den Klinkenabschnitt 516 bildende Hebelende 515 an der kugelförmigen Querschnittserweiterung 518B abgleitet und das erste Hebelelement 517 aufgrund einer höheren Masse im Bereich seines an dem zweiten Hebelelement 572 anliegenden L-Schenkels einen mittleren Bereich 518C des Verriegelungselement-Gegenkörpers 518 umgreifend in eine wenigstens annähernd horizontale Position zurückkippt. In dieser Stellung kann das mit einem L-Schenkel an dem angrenzenden L-Schenkel des ersten Hebelelementes anliegende zweite Hebelelement 572 mit seinem freien Hebelende 517 in eine taschenartige Ausnehmung 550 des schwenkbaren Sperrelementes 522, welche den Sitz 550 für das Verriegelungselement 514 bildet, geführt werden. Das durch das zweite Hebelelement 572 aufgebrachte Drehmoment an dem schwenkhebelartigen Sperrglied 522 wird durch den das Sperrglied 522 in Bereitschaftsstellung gegen Rotation sichernden Schmelzeinsatz 548 auf einen karosseriefesten Grundkörper 575 übertragen.

Der Schmelzeinsatz 548 des Aktuators 524 besteht bei der Ausführung gemäß Fig. 16 und Fig. 17 wiederum aus einem abgestimmten Flachband mit einem zur Verschraubung an dem Grundkörper 575 erforderlichen Isolationskörper 578 für den "+"-Pol und einem an dem hebelartigen Sperrglied 522 befestigten Masseanschluss.

Bei einer von einem zugeordneten Steuergerät erkannten Crash-Situation mit einem drohenden Fahrzeugüberschlag wird von dem Steuergerät ein Arbeitsrelais geschaltet, das einen entsprechenden Arbeitsstrom zum Trennen des Schmelzeinsatzes 548 schaltet. Durch die Trennung des Schmelzeinsatzes 548 wird das hebelartige Sperrglied 522 durch das anliegende Drehmoment des Verriegelungselements 514 aus der Verriegelungslage bewegt, wie dies in Fig. 17 dargestellt ist.

Die aneinander liegenden Hebelelemente 570, 572 des Verriegelungselementes 514 werden durch die an dem gabelartigen Klinkenabschnitt 516 angreifende Kraft des Überrollkörpers 2 in dessen Ausfahrrichtung vorliegend im Uhrzeigersinn verschwenkt, wobei das kugelartige Ende 518B des Verriegelungselement-Gegenkörpers 518 aus Eingriff mit dem gabelartigen Klinkenabschnitt 516 des Verriegelungselementes 514 gelangt. Der einen Überlebensraum für Fahrzeuginsassen sichernde Überrollkörper 2 kann so in seine Stützposition ausfahren.

## Patentansprüche

1. Lösbare Halteeinrichtung zum Halten eines zwischen einer abgesenkten Ruheposition und einer ausgefahrenen Stützposition verlagerbaren Überrollkörpers (2) einer Überrollschutzvorrichtung für ein Kraftfahrzeug in seiner Ruheposition, mit einem schwenkbaren Verriegelungselement (114, 214, 314, 414, 514), welches mit einem Verriegelungselement-Gegenkörper (118, 218, 318, 418, 518) des Überrollkörpers (2) und einem Aktuator (124, 324, 424, 524) derart zusammenwirkt, dass es in Ruheposition des Überrollkörpers (2) in Eingriff mit dem Verriegelungselement-Gegenkörper (118, 218, 318, 418, 518) steht und im Crash-Fall den Überrollkörper (2) zur Überführung in dessen Stützposition freigibt,
**dadurch gekennzeichnet,**
**dass** das Verriegelungselement (114, 214, 314, 414, 514) in Ruheposition durch einen im Crash-Fall aufschmelzbaren Schmelzeinsatz (148, 348, 448, 548) des Aktuators (124, 324, 424, 524) gehalten ist.

2. Lösbare Halteeinrichtung nach Anspruch 1
**dadurch gekennzeichnet,**
**dass** zwischen dem Verriegelungselement (114, 214, 414, 514) und dem Aktuator (124, 424, 524) ein Sperrglied (122, 122', 222, 422, 522) angeordnet ist, welches das Verriegelungselement (114, 214, 414, 514) in einer den Überrollkörper (2) haltenden Sperrstellung hält oder freigibt, wobei das Sperrglied (122, 122', 222, 422, 522) in der durch Aufschmelzen des Schmelzeinsatzes (148, 448, 548) aufhebbaren Sperrstellung gegen einen Sitz (150, 450, 550) gedrückt ist.

3. Lösbare Halteeinrichtung nach Anspruch 2,
**dadurch gekennzeichnet,**
**dass** das Sperrglied (122, 122', 222) entgegen dem Sitz (150) durch einen als Feder (132, 232) ausgebildeten Energiespeicher gedrückt ist, wobei die Feder (132, 232) einenends an einem an dem Sperrglied (122) ausgebildeten Federsitz (152) und anderenends an einem gehäuseartigen Grundkörper (138, 238) abgestützt ist.

4. Lösbare Halteeinrichtung nach Anspruch 3,
**dadurch gekennzeichnet,**
**dass** an dem Grundkörper (138, 238) ein Sperrgliedanschlag (154) zur Begrenzung des Weges des Sperrglieds (122, 222) in einer dem Verriegelungselement (114, 214) abgewandten Richtung nach einem Lösen des Sitzes (150) im Crash-Fall vorgesehen ist.

5. Lösbare Halteeinrichtung nach einem der Ansprüche 2 bis 4,
**dadurch gekennzeichnet,**
**dass** der Sitz (150) des Sperrglieds (122, 222) in Sperrstellung durch wenigstens zwei schwenkbar gelagerte Backenkörper (156, 158) gebildet ist, welche durch den Schmelzeinsatz (148) miteinander verbunden sind.

6. Lösbare Halteeinrichtung nach Anspruch 5,
**dadurch gekennzeichnet,**
**dass** der Schmelzeinsatz (148) zwischen an den Backenkörpern (156, 158) ausgebildeten Halterungen (160) angeordnet und mit einer Energiezuführeinrichtung (166) verbunden ist.

7. Lösbare Halteeinrichtung nach Anspruch 5 oder 6,
**dadurch gekennzeichnet,**
**dass** die Backenkörper (156, 158) jeweils um einen an dem Grundkörper (138, 238) angeordneten Lagerbolzen (168, 169) schwenkbar sind und vorzugsweise jeweils eine Keilfläche (162, 164) aufweisen, welche zusammen den Sitz (150) bilden.

8. Lösbare Halteeinrichtung nach Anspruch 7,
**dadurch gekennzeichnet,**
**dass** die Lagerbolzen (168, 169) zur Reversierung einer entriegelnden Bewegung des Sperrglieds (122) an dem Grundkörper (138) in entriegelnder Bewegungsrichtung des Sperrglieds (122) entgegen der Kraft eines Energiespeichers (172, 173) verschiebbar gelagert sind, wobei die Kraft der auf die Lagerbolzen (168, 169) wirkenden Energiespeicher (172, 173) insgesamt größer ist als die Kraft des auf das Sperrglied (122) in entriegelndem Sinn wirkenden Energiespeichers (132).

9. Lösbare Halteeinrichtung nach Anspruch 8,
**dadurch gekennzeichnet,**
**dass** die auf die Lagerbolzen (168, 169) wirkenden Energiespeicher als Druckfedern (172, 173) ausgebildet sind.

10. Lösbare Halteeinrichtung nach einem der Ansprüche 7 bis 9,
**dadurch gekennzeichnet,**
**dass** die Lagerbolzen (168, 169) in Langlöchern (170, 171) des Grundkörpers (138) geführt sind.

11. Lösbare Halteeinrichtung nach einem der Ansprüche 2 bis 7,
**dadurch gekennzeichnet,**
**dass** das Sperrglied (122') mit teleskopartig ineinander verschiebbaren Sperrgliedteilen (123, 125) ausgebildet ist, zwischen denen ein Federelement (131) angeordnet ist.

12. Lösbare Halteeinrichtung nach einem der Ansprüche 2 bis 11,
**dadurch gekennzeichnet,**
**dass** das Sperrglied als ein Stift (122, 122', 422) ausgebildet ist.

13. Lösbare Halteeinrichtung nach einem der Ansprüche 2 bis 12,
**dadurch gekennzeichnet,**
**dass** das Sperrglied (122, 122', 222) in Axialrichtung, insbesondere koaxial zur Bewegungsrichtung des Überrollkörpers (2), linear bewegbar ist.

14. Lösbare Halteeinrichtung nach einem der Ansprüche 1 bis 12,
**dadurch gekennzeichnet,**
**dass** das Sperrglied als ein Blechelement (222) ausgebildet ist.

15. Lösbare Halteeinrichtung nach einem der Ansprüche 2 bis 12,
**dadurch gekennzeichnet,**
**dass** das Sperrglied (422, 522) bei Aufschmelzen des Schmelzeinsatzes (448, 548) in eine das Verriegelungselement (414, 514) außer Eingriff mit dem Verriegelungselement-Gegenkörper (418, 518) bringende Stellung schwenkt.

16. Lösbare Halteeinrichtung nach einem der Ansprüche 2 bis 14,
**dadurch gekennzeichnet,**
**dass** das Verriegelungselement (114, 214) scheibenartig ausgebildet ist mit einem Klinkenabschnitt (116, 216) zum Eingriff mit dem Verriegelungselement-Gegenkörper (118, 218), mit einer umfangsseitigen Ausnehmung (128, 228), in die das Sperrglied (122, 122', 222) in Ruheposition eingreift, und mit einem umfangsseitigen Anschlag (134, 234), an dem das zur Überführung des Überrollkörpers (2) in dessen Stützposition aus der Ausnehmung (128, 228) bewegte Sperrglied (122, 122', 222) nach einer das Verriegelungselement (114, 214) aus Eingriff mit dem Verriegelungselement-Gegenkörper (118, 218, 318) bringenden Rotation des Verriegelungselementes (114, 214) anliegt.

17. Lösbare Halteeinrichtung nach einem der Ansprüche 2 bis 15,
**dadurch gekennzeichnet,**
**dass** das schwenkbar gelagerte Verriegelungselement (414) hebelartig, vorzugsweise im Wesentlichen C-förmig, ausgebildet ist, wobei ein Hebelende (415) einen Klinkenabschnitt (416) zum Eingriff mit dem Verriegelungselement-Gegenkörper (418) bildet und das andere Hebelende (417) mit dem Sperrglied (422) verbunden ist, und wobei ein Endbereich des Sperrgliedes (422) auslenkbar mit dem Verriegelungselement (414) verbunden ist und ein entgegengesetzter Endbereich des Sperrgliedes (422) in Ruhelage des Überrollkörpers (6) gegen einen Sitz (450) gedrückt ist, von dem das Sperrglied (422) bei Aufschmelzen des Schmelzeinsatzes (448) durch den Aktuator (424) in eine eine Rotation des Verriegelungselements (414) freigebende Position bewegbar ist.

18. Lösbare Halteeinrichtung nach Anspruch 17,
**dadurch gekennzeichnet,**
**dass** das Sperrglied (422) mit dem Verriegelungselement (414) über eine Feder (423) auslenkbar verbunden ist.

19. Lösbare Halteeinrichtung nach Anspruch 17 oder 18,
**dadurch gekennzeichnet,**
**dass** das Sperrglied (422) bei Aufschmelzen des Schmelzeinsatzes (448) durch einen Schlagbolzen (462) des Aktuators (424) in eine eine Rotation des Verriegelungselements (414) freigebende Position bewegbar ist, wobei der Schlagbolzen (462) in Bereitschaftsstellung durch ein Federelement (463) vorgespannt ist und durch den Schmelzeinsatz (448) gehalten ist.

20. Lösbare Halteeinrichtung nach einem der Ansprüche 2 bis 15,
**dadurch gekennzeichnet,**
**dass** das schwenkbar gelagerte Verriegelungselement (514) hebelartig und wenigstens zweiteilig ausgebildet ist, wobei ein erstes Hebelelement (570) und ein zweites Hebelelement (572) jeweils im Wesentlichen L-förmig ausgebildet sind und mit ihren einander zugewandten L-Schenkeln um eine gemeinsame Drehachse (574) schwenkbar sind, und wobei das erste Hebelelement (570) mit einem dem Verriegelungselement-Gegenkörper (518) zugewandten Hebelende (515) einen Klinkenabschnitt (516) zum Eingriff mit dem Verriegelungselement-Gegenkörper (518) bildet und das zweite Hebelelement (572) mit einem dem ersten Hebelelement (570) abgewandten Hebelende (517) mit dem Sperrglied (522) verbunden ist, welches Sperrglied (522) bei Aufschmelzen des Schmelzeinsatzes (548) in eine eine Rotation des Verriegelungselements (514) freigebende Position schwenkbar ist.

21. Lösbare Halteeinrichtung nach einem der Ansprüche 1 bis 20,
**dadurch gekennzeichnet,**
**dass** der Verriegelungselement-Gegenkörper (418, 518) hantelartig mit jeweils einer Querschnittsvergrößerung (418A, 518A, 418B, 518B) an einem Ende ausgebildet ist, wobei der Verriegelungselement-Gegenkörper (418, 518) mit einer Querschnittsvergrößerung (418A, 518A) in einem Kanal (20) des Überrollkörpers (2) geführt ist und mit der anderen Querschnittsvergrößerung (418B, 518B) in Ruhestellung des Überrollkörpers (2) mit dem Verriegelungselement (414, 514) in Eingriff steht.

22. Lösbare Halteeinrichtung nach Anspruch 1,
**dadurch gekennzeichnet,**
**dass** das Verriegelungselement (314) in Ruheposition radial und auf Zug belastet über den Schmelzeinsatz (348) mit einem Grundkörper (338) verbunden ist, und dass das Verriegelungselement (314) hebelartig ausgebildet ist, wobei ein Hebelende (315) einen Klinkenabschnitt (316) zum Eingriff mit dem Verriegelungselement-Gegenkörper (318) bildet und im Bereich des anderen Hebelendes (317) eine Halterung (360) für den mit einer Energiezuführeinrichtung (366) verbundenen Schmelzeinsatz (348) angeordnet ist.

23. Lösbare Halteeinrichtung nach Anspruch 22,
**dadurch gekennzeichnet,**
**dass** das Verriegelungselement (314) im Bereich seines dem Überrollkörper (2) zugewandten Hebelendes (315) eine in Axialrichtung verlaufende Schräge (319) aufweist und derart biegsam ausgebildet ist, dass das Verriegelungselement (314) bei einer Reversierung einer Auslösung des Überrollkörpers (2) durch den Verriegelungselement-Gegenkörper (318) des abwärts bewegten Überrollkörpers (2) bis zu einem Eingriff des Klinkenabschnitts (316) auslenkbar ist.

24. Lösbare Halteeinrichtung nach Anspruch 22 oder 23,
**dadurch gekennzeichnet,**
**dass** der Grundkörper (338) im Wesentlichen einen L-förmigen Querschnitt aufweist, wobei ein L-Schenkel (339) eine Halterung (361) für den mit einer Energiezuführeinrichtung (366) verbundenen Schmelzeinsatz (348) aufweist und der andere L-Schenkel (341) eine Lagerung (374) des schwenkbaren Verriegelungselements (314) trägt, wobei der Grundkörper (338), das Verriegelungselement (314) und dessen Lagerung (374) an dem Grundkörper (338) im Wesentlichen sich axial überdeckend angeordnet sind.

25. Lösbare Halteeinrichtung nach einem der Ansprüche 1 bis 24,
**dadurch gekennzeichnet,**
**dass** der Schmelzeinsatz (148, 348, 448, 548) plattenartig oder flachbandartig ausgebildet ist.

## Claims

1. A releasable holding device for holding a rollover element (2) of a rollover protection device for a motor vehicle in its rest position, said rollover element (2) being displaceable between a lowered rest position and an extended support position, said device comprising a pivotable locking element (114, 214, 314, 414, 514) that cooperates with a locking element counterpart (118, 218, 318, 418, 518) of the rollover element (2) and an actuator (124, 324, 424, 524) such that it is in engagement with the locking element counterpart (118, 218, 318, 418, 518) in the rest position of the rollover element (2) and releases the rollover element (2) in the event of a crash so as to move it into its support position,
**characterized in that**
the locking element (114, 214, 314, 414, 514) is held in the rest position by a fusible element (148, 348, 448, 548) of the actuator (124, 324, 424, 524) that is fusible in the event of a crash.

2. A releasable holding device according to claim 1, **characterized in that** a blocking member (122, 122', 222, 422, 522) is arranged between the locking element (114, 214, 414, 514) and the actuator (124, 424, 524), said blocking member (122, 122', 222, 422, 522) holding or releasing the locking element (114, 214, 414, 514) in a blocking position which holds the rollover element (2), the blocking member (122, 122', 222, 422, 522) being urged against a seat (150, 450, 550) in the blocking position that can be neutralized by fusion of the fusible element (148, 448, 548).

3. A releasable holding device according to claim 2, **characterized in that** the blocking member (122, 122', 222) is urged counter to the seat (150) by an energy accumulator in the form of a spring (132, 232), one end of said spring (132, 232) being supported on a spring seat (152) formed on the blocking member (122) and its other end being supported on a casing-like base element (138, 238).

4. A releasable holding device according to claim 3, **characterized in that** the base element (138, 238) is provided with a blocking member stop (154) limiting the travel of the blocking member (122, 222) in a direction turned away from the locking element (114, 214) after release of the seat (150) in the event of a crash.

5. A releasable holding device according to any one of claims 2 to 4, **characterized in that** the seat (150) of the blocking member (122, 222) in the blocking position is formed by at least two pivotably mounted jaw bodies (156, 158) which are connected to each other by the fusible element (148).

6. A releasable holding device according to claim 5, **characterized in that** the fusible element (148) is arranged between supports (160) formed on the jaw bodies (156, 158) and is connected to an energy supply device (166).

7. A releasable holding device according to claim 5 or 6, **characterized in that** the jaw bodies (156, 158) are each pivotable about a bearing pin (168, 169) arranged on the base element (138, 238) and preferably comprise one wedge surface (162, 164) each, which together form the seat (150).

8. A releasable holding device according to claim 7, **characterized in that** the bearing pins (168, 169), in order to reverse an unlocking movement of the blocking member (122), are mounted to be displaceable on the base element (138) in a direction of movement for unlocking the blocking member (122) against the force of an energy accumulator (172, 173), the force of the energy accumulators (172, 173) acting on the bearing pins (168, 169) being greater in total than the force of the energy accumulator (132) acting on the blocking member (122) in an unlocking sense.

9. A releasable holding device according to claim 8, **characterized in that** the energy accumulators acting upon the bearing pins (168, 169) are provided as compression springs (172, 173).

10. A releasable holding device according to any one of claims 7 to 9, **characterized in that** the bearing pins (168, 169) are guided in oblong holes (170, 171) of the base element (138).

11. A releasable holding device according to any one of claims 2 to 7, **characterized in that** the blocking member (122') is provided with blocking member parts (123, 125) that are displaceable inside each other in a telescopic manner and between which a spring element (131) is arranged.

12. A releasable holding device according to any one of claims 2 to 11, **characterized in that** the blocking member is provided as a pin (122, 122', 422).

13. A releasable holding device according to any one of claims 2 to 12, **characterized in that** the blocking member (122, 122', 222) is linearly movable in an axial direction, in particular coaxially to the direction of movement of the rollover element (2).

14. A releasable holding device according to any one of claims 1 to 12, **characterized in that** the blocking member is provided as a sheet metal element (222).

15. A releasable holding device according to any one of claims 2 to 12, **characterized in that**, upon melting of the fusible element (448, 548), the blocking member (422, 522) pivots into a position that disengages the locking element (414, 514) from the locking element counterpart (418, 518).

16. A releasable holding device according to any one of claims 2 to 14, **characterized in that** the locking element (114, 214) is provided in the form of a disk with a detent section (116, 216) for engagement with the locking element counterpart (118, 218), with a circumferential recess (128, 228) in which the blocking member (122, 122', 222) engages in the rest position, and with a circumferential stop (134, 234) against which the blocking member (122, 122', 222), moved out of the recess (128, 228) in order to move the rollover element (2) into its support position, abuts after a rotation of the locking element (114, 214) disengaging the locking element (114, 214) from the locking element counterpart (118, 218, 318).

17. A releasable holding device according to any one of claims 2 to 15, **characterized in that** the pivotably mounted locking element (414) is provided in the manner of a lever, preferably substantially C-shaped, one lever end (415) forming a detent section (416) for engagement with the locking element counterpart (418) and the other lever end (417) being connected to the blocking member (422), and one end region of the blocking member (422) being connected to the locking element (414) in a deflectable manner and an opposite end region of the blocking member (422) being urged against a seat (450) in the rest position of the rollover element (6), from which seat (450) the blocking member (422) is movable by the actuator (424), upon melting of the fusible element (448), into a position enabling rotation of the locking element (414).

18. A releasable holding device according to claim 17, **characterized in that** the blocking member (422) is connected to the locking element (414) in a deflectable manner via a spring (423).

19. A releasable holding device according to claim 17 or 18, **characterized in that** the blocking member (422) is movable by a striker (462) of the actuator (424), upon melting of the fusible element (448), into a position enabling rotation of the locking element (414), the striker (462) being prestressed in its ready position by a spring element (463) and being held by the fusible element (448).

20. A releasable holding device according to any one of claims 2 to 15, **characterized in that** the pivotably mounted locking element (514) is provided in the manner of a lever and in at least two parts, a first lever element (570) and a second lever element (572) each having a substantially L-shaped design and being pivotable about a common axis of rotation (574) by their L-arms that face each other, and the first lever element (570) forming a detent section (516) together with a lever end (515) facing the locking element counterpart (518) for engagement with the locking element counterpart (518), and the second lever element (572) being connected to the blocking member (522) by a lever end (517) facing away from the first lever element (570), which blocking member (522) is pivotable, upon melting of the fusible element (548), into a position enabling rotation of the locking element (514).

21. A releasable holding device according to any one of claims 1 to 20, **characterized in that** the locking element counterpart (418, 518) has a dumbbell shape with an enlarged cross-section (418A, 518A, 418B, 518B) at each end, one enlarged cross-section (418A, 518A) of the locking element counterpart (418, 518) being guided in a channel (20) of the rollover element (2) and the other enlarged cross-section (418B, 518B) being in engagement with the locking element (414, 514) in the rest position of the rollover element (2).

22. A releasable holding device according to claim 1, **characterized in that** the locking element (314) is connected, in its rest position, to a base element (338) via the fusible element (348) under radial and tensile stress, and that the locking element (314) is provided in the form of a lever, one lever end (315) forming a detent section (316) for engagement with the locking element counterpart (318) and there being provided, in the region of the other lever end (317), a support (360) for the fusible element (348) that is connected to an energy supply device (366).

23. A releasable holding device according to claim 22, **characterized in that** the locking element (314) comprises, in the region of its lever end (315) facing the rollover element (2), a chamfer (319) extending in an axial direction and is flexible such that the locking element (314) is deflectable, in the case of a reversal of a release of the rollover element (2) by the locking element counterpart (318) of the downwardly moving rollover element (2), until it engages with the detent section (316).

24. A releasable holding device according to claim 22 or 23, **characterized in that** the base element (338) has a substantially L-shaped cross-section, one L-arm (339) comprising a support (361) for the fusible element (348) that is connected to an energy supply device (366) and the other L-arm (341) carrying a bearing (374) of the pivotable locking element (314), and the base element (338), the locking element (314) and its bearing (374) are arranged on the base element (338) such that they substantially overlap axially.

25. A releasable holding device according to any one of claims 1 to 24, **characterized in that** the fusible element (148, 348, 448, 548) is provided in the form of a disk or a flat band.

## Revendications

1. Dispositif de support amovible pour maintenir un corps de sécurité (2) d'un dispositif de protection au retournement pour un véhicule automobile dans sa position de repos, ledit corps de sécurité (2) étant déplaçable entre une position de repos abaissée et une position d'appui sortie, ledit dispositif comprenant un élément de verrouillage (114, 214, 314, 414, 514) pivotant qui coopère avec un contre-élément de verrouillage (118, 218, 318, 418, 518) du corps de sécurité (2) et un actionneur (124, 324, 424, 524) de manière à venir en prise dans ledit contre-élément de verrouillage (118, 218, 318, 418, 518) dans la position de repos du corps de sécurité (2) et à libérer le corps de sécurité (2) en cas d'accident afin d'amener celui-ci dans sa position d'appui,
**caractérisé en ce que**
l'élément de verrouillage (114, 214, 314, 414, 514) est maintenu en position de repos par un élément fusible (148, 348, 448, 548) de l'actionneur (124, 324, 424, 524) qui est fusible en cas d'accident.

2. Dispositif de support amovible selon la revendication 1, **caractérisé en ce qu'**un élément d'arrêt (122, 122', 222, 422, 522) est disposé entre l'élément de verrouillage (114, 214, 414, 514) et l'actionneur (124, 424, 524), ledit élément d'arrêt (122, 122', 222, 422, 522) maintenant ou libérant l'élément de verrouillage (114, 214, 414, 514) dans une position d'arrêt qui maintient le corps de sécurité (2), ledit élément d'arrêt (122, 122', 222, 422, 522) étant pressé contre un siège (150, 450, 550) dans la position d'arrêt qui peut être neutralisée par fusion de l'élément fusible (148, 448, 548).

3. Dispositif de support amovible selon la revendication 2, **caractérisé en ce que** l'élément d'arrêt (122, 122', 222) est pressé à l'encontre du siège (150) par un accumulateur d'énergie sous forme d'un ressort (132, 232) dont une extrémité prend appui sur un siège de ressort (152) formé sur l'élément d'arrêt (122) et dont l'autre extrémité prend appui sur un corps de base (138, 238) conformé à la manière d'une boîte.

4. Dispositif de support amovible selon la revendication 3, **caractérisé en ce que** l'on prévoit sur le corps de base (138, 238) une butée de l'élément d'arrêt (154) limitant la course de l'élément d'arrêt (122, 222) dans une direction détournée de l'élément de verrouillage (114, 214) après un détachement du siège (150) en cas d'accident.

5. Dispositif de support amovible selon l'une quelconque des revendications 2 à 4, **caractérisé en ce que** le siège (150) de l'élément d'arrêt (122, 222) en position d'arrêt est constitué par au moins deux corps de mâchoire (156, 158) montés à pivotement et raccordés l'un à l'autre par l'élément fusible (148).

6. Dispositif de support amovible selon la revendication 5, **caractérisé en ce que** l'élément fusible (148) est disposé entre des supports (160) formés sur les corps de mâchoire (156, 158) et est raccordé à un dispositif d'apport d'énergie (166).

7. Dispositif de support amovible selon la revendication 5 ou 6, **caractérisé en ce que** l'on peut faire pivoter chacun des corps de mâchoire (156, 158) autour d'un boulon de palier (168, 169) disposé sur le corps de base (138, 238) et que chacun d'entre eux comprend de préférence une face biaise (162, 164) constituant conjointement le siège (150).

8. Dispositif de support amovible selon la revendication 7, **caractérisé en ce que**, pour la réversion d'un mouvement déverrouillant de l'élément d'arrêt (122), les boulons de palier (168, 169) sont montés de manière déplaçable sur le corps de base (138) en direction d'un mouvement de déverrouillage de l'élément d'arrêt (122), à l'encontre de la force d'un accumulateur d'énergie (172, 173), la force des accumulateurs d'énergie (172, 173) qui agissent sur les boulons de palier (168, 169) étant supérieure, dans l'ensemble, à la force de l'accumulateur d'énergie (132) agissant sur l'élément d'arrêt (122) dans un sens déverrouillant.

9. Dispositif de support amovible selon la revendication 8, **caractérisé en ce que** les accumulateurs d'énergie agissant sur les boulons de palier (168, 169) se présentent sous forme de ressorts de compression (172, 173).

10. Dispositif de support amovible selon l'une quelconque des revendications 7 à 9, **caractérisé en ce que** les boulons de palier (168, 169) sont guidés dans des trous oblongs (170, 171) du corps de base (138).

11. Dispositif de support amovible selon l'une quelconque des revendications 2 à 7, **caractérisé en ce que** l'élément d'arrêt (122') est pourvu de pièces d'élément d'arrêt (123, 125) qui sont déplaçables l'une dans l'autre de manière télescopique et entre lesquelles un élément de ressort (131) est disposé.

12. Dispositif de support amovible selon l'une quelconque des revendications 2 à 11, **caractérisé en ce que** l'élément d'arrêt se présente sous forme d'un boulon (122, 122', 422).

13. Dispositif de support amovible selon l'une quelconque des revendications 2 à 12, **caractérisé en ce que** l'élément d'arrêt (122, 122', 222) est déplaçable linéairement en direction axiale, en particulier coaxialement à la direction de mouvement du corps de sécurité (2).

14. Dispositif de support amovible selon l'une quelconque des revendications 1 à 12, **caractérisé en ce que** l'élément d'arrêt se présente sous forme d'un élément en tôle (222).

15. Dispositif de support amovible selon l'une quelconque des revendications 2 à 12, **caractérisé en ce que** l'élément d'arrêt (422, 522) pivote, lors de la fusion de l'élément fusible (448, 548), vers une position détachant l'élément de verrouillage (414, 514) du contre-élément de verrouillage (418, 518).

16. Dispositif de support amovible selon l'une quelconque des revendications 2 à 14, **caractérisé en ce que** l'élément de verrouillage (114, 214) se présente en forme de disque avec une partie en forme de cliquet (116, 216) destinée à venir en prise dans le contre-élément de verrouillage (118, 218), avec un évidement circonférentiel (128, 228) dans lequel l'élément d'arrêt (122, 122', 222) vient en prise en position de repos, et avec une butée circonférentielle (134, 234) contre lequel l'élément d'arrêt (122, 122', 222), sorti de l'évidement (128, 228) afin d'amener le corps de sécurité (2) dans sa position d'appui, s'applique après une rotation de l'élément de verrouillage (114, 214) détachant l'élément de verrouillage (114, 214) du contre-élément de verrouillage (118, 218, 318).

17. Dispositif de support amovible selon l'une quelconque des revendications 2 à 15, **caractérisé en ce que** l'élément de verrouillage (414) monté à pivotement se présente en forme d'un levier, de préférence en forme de C, une extrémité du levier (415) constituant une partie en forme de cliquet (416) destinée à venir en prise dans le contre-élément de verrouillage (418) et l'autre extrémité du levier (417) étant raccordée à l'élément d'arrêt (422), et une partie terminale de l'élément d'arrêt (422) étant raccordée à l'élément de verrouillage (414) de manière à permettre une déviation, et une partie terminale opposée de l'élément d'arrêt (422) étant pressée contre un siège (450) dans la position de repos du corps de sécurité (6), l'élément d'arrêt (422) pouvant être amené par l'actionneur (424), lors de la fusion de l'élément fusible (448), du siège (450) vers une position permettant une rotation de l'élément de verrouillage (414).

18. Dispositif de support amovible selon la revendication 17, **caractérisé en ce que** l'élément d'arrêt (422) est raccordé à l'élément de verrouillage (414) au moyen d'un ressort (423) de manière à permettre une déviation.

19. Dispositif de support amovible selon la revendication 17 ou 18, **caractérisé en ce que** l'élément d'arrêt (422) peut être amené, par un percuteur (462) de l'actionneur (424), lors de la fusion de l'élément fusible (448), vers une position permettant une rotation de l'élément de verrouillage (414), le percuteur (462), en position d'attente, étant précontraint par un élément de ressort (463) et étant tenu par l'élément fusible (448).

20. Dispositif de support amovible selon l'une quelconque des revendications 2 à 15, **caractérisé en ce que** l'élément de verrouillage (514) monté à pivotement se présente en forme d'un levier et en au moins deux parties, un premier élément de levier (570) et un deuxième élément de levier (572) présentant chacun sensiblement une forme en L et pivotant autour d'un axe de rotation (574) commun par leurs branches de L se faisant face, et le premier élément de levier (570) constituant, avec une extrémité de levier (515) faisant face au contre-élément de verrouillage (518), une partie en forme de cliquet (516) destinée à venir en prise dans le contre-élément de verrouillage (518), et le deuxième élément de levier (572) étant raccordé à l'élément d'arrêt (522) par une extrémité de levier (517) détournée du premier élément de levier (570), ledit élément d'arrêt (522) pouvant être pivoté, lors de la fusion de l'élément fusible (548), vers une position permettant une rotation de l'élément de verrouillage (514).

21. Dispositif de support amovible selon l'une quelconque des revendications 1 à 20, **caractérisé en ce que** le contre-élément de verrouillage (418, 518) se présente en forme d'haltère ayant une section transversale élargie (418A, 518A, 418B, 518B) à chaque extrémité, une section transversale élargie (418A, 518A) du contre-élément de verrouillage (418, 518) étant guidée dans un canal (20) du corps de sécurité (2) et l'autre section transversale élargie (418B, 518B) venant en prise dans l'élément de verrouillage (414, 514) dans la position de repos du corps de sécurité (2).

22. Dispositif de support amovible selon la revendication 1, **caractérisé en ce que** l'élément de verrouillage (314) est raccordé en position de repos, sous des efforts radiaux et de traction, à un corps de base (338) par l'élément fusible (348), et **en ce que** l'élément de verrouillage (314) se présente en forme d'un levier dont une extrémité (315) constitue une partie en forme de cliquet (316) destinée à venir en prise dans le contre-élément de verrouillage (318) et un support (360) pour l'élément fusible (348) est disposé dans la région de l'autre extrémité de levier (317), l'élément fusible étant raccordé à un dispositif d'apport d'énergie (366).

23. Dispositif de support amovible selon la revendication 22, **caractérisé en ce que**, dans la région de son extrémité de levier (315) faisant face au corps de sécurité (2), l'élément de verrouillage (314) comprend un biais (319) s'étendant en direction axiale et que l'élément de verrouillage (314) est flexible de manière à permettre une déviation de l'élément de verrouillage (314) en cas de réversion d'un déclenchement du corps de sécurité (2) par le contre-élément de verrouillage (318) du corps de sécurité (2) abaissé, jusqu'à ce qu'il vienne en prise dans la partie en forme de cliquet (316).

24. Dispositif de support amovible selon la revendication 22 ou 23, **caractérisé en ce que** le corps de base (338) présente une section transversale sensiblement en forme de L, une branche (339) dudit L comprenant un support (361) pour l'élément fusible (348), ce dernier étant raccordé à un dispositif d'apport d'énergie (366), et l'autre branche (341) dudit L portant un palier (374) de l'élément de verrouillage (314) pivotant, et le corps de base (338), l'élément de verrouillage (314) et son palier (374) sont disposés sur le corps de base (338) de manière à être sensiblement superposés axialement les uns sur les autres.

25. Dispositif de support amovible selon l'une quelconque des revendications 1 à 24, **caractérisé en ce que** l'élément fusible (148, 348, 448, 548) se présente en forme d'un disque ou d'une bande plate.
